# EUROPEAN PATENT APPLICATION

(11) **EP 4 470 357 A1**
(43) Date of publication of application: **04.12.2024**
(21) Application number: 23742929.5
(22) Date of filing: 18.01.2023
(51) Int. Cl.: A01D 34/66, A01D 34/00

(54) **CONTROL METHOD FOR OUTDOOR POWER DEVICE, AND OUTDOOR POWER DEVICE**

(30) Priority: 24.01.2022 CN 202210083956; 25.01.2022 CN 202220206329 U; 11.03.2022 CN 202210239400; 11.03.2022 CN 202220540079 U
(71) Applicant: Globe (Jiangsu) Co., Ltd., Changzhou, Jiangsu 213023 (CN)
(72) Inventor: ZHAO, Peng, hangzhou, Jiangsu 213023 (CN); YU, Tao, hangzhou, Jiangsu 213023 (CN); XUE, Jiafu, hangzhou, Jiangsu 213023 (CN); WEI, Qunli, hangzhou, Jiangsu 213023 (CN); CHEN, Hui, hangzhou, Jiangsu 213023 (CN); DING, Shiyuan, hangzhou, Jiangsu 213023 (CN); WANG, Jing, hangzhou, Jiangsu 213023 (CN); DING, Zhizheng, hangzhou, Jiangsu 213023 (CN); XU, Wenwei, hangzhou, Jiangsu 213023 (CN); WANG, Yanqiang, hangzhou, Jiangsu 213023 (CN); ZHAO, Lei, hangzhou, Jiangsu 213023 (CN); XU, Yueyue, hangzhou, Jiangsu 213023 (CN)
(74) Representative: Bergenstråhle & Partners AB
(86) International application number: PCT/CN2023/072873
(87) International publication number: WO 2023/138614

(57) **Abstract**

A control method of an outdoor power equipment includes: determining corresponding initial current limiting values and maximum rotating speeds of a cutter motor and a walking motor of the outdoor power equipment according to a previous mowing data; monitoring an input current of each of the motors, and determining whether the input current of each motor is less than the current limiting value; when the input current of the walking motor is continuously equal to or greater than the current limiting value and an output value of a battery pack of the outdoor power equipment is less than a maximum discharging capacity, resetting the current limiting values and the maximum rotating speeds of the walking motor and the cutter motor according to a current slope of the outdoor power equipment and the maximum discharging capacity of the battery pack.

## Description

### CROSS REFERENCE TO RELATED APPLICATION

The present application is a continuation Application of PCT application No. PCT/CN2023/072873 filed on January 18, 2023, which claims the benefit of CN202210083956.7 filed on January 24, 2022, CN202210239400.2 filed on March 11, 2022, CN202220540079.7 filed on March 11, 2022, and CN202220206329.3 filed on January 25, 2022. All the above are hereby incorporated by reference for all purposes.

### TECHNICAL FIELD

The disclosure belongs to a technical field of garden tools, and in particular relates to a control method of an outdoor power equipment and an outdoor power equipment.

### BACKGROUND

As human living standards continue to improve, the requirements for the environment and greening are also increasing year by year. Neat lawns are an indispensable part of garden construction and urban environment.

There are many kinds of outdoor power equipment for mowing on the market, but the working modes are relatively simple. It is impossible to optimize the working efficiency of the outdoor power equipment to the maximum extent according to the slope and lawn conditions of the mower so as to keep the whole machine in the best performance state. In some electric mowers, the user may forget to turn off the key of the mower, causing the battery pack to be powered off, making the electric mower unable to start and use, and thus affecting work efficiency.

### SUMMARY

One or more embodiments of the disclosure provide a control method of an outdoor power equipment and the outdoor power equipment, which solves a problem of low working efficiency of conventional outdoor power equipment.

To solve the above technical problems, this disclosure is implemented through following technical solutions.

One or more embodiments of the disclosure provide the control method of the outdoor power equipment, the control method includes:
determining corresponding initial current limiting values and maximum rotating speeds of a cutter motor and a walking motor of the outdoor power equipment according to previous mowing data;
monitoring an input current of each of the cutter motor and the walking motor, and determining whether the input current of each of the cutter motor and the walking motor is less than the corresponding current limiting value; and
resetting the current limiting values and the maximum rotating speeds of the walking motor and the cutter motor according to a current slope of the outdoor power equipment and a maximum discharging capacity of a battery pack if the input current of the walking motor is continuously equal to or greater than the current limiting value of the walking motor and an output value of the battery pack of the outdoor power equipment is less than the maximum discharging capacity.

In some embodiments, if the input current of the walking motor is continuously equal to or greater than the current limiting value of the walking motor and the output value of the battery pack is less than the maximum discharging capacity, an output power of the walking motor is increased and an output power of the cutter motor is decreased.

In some embodiments, if the input current of the walking motor is continuously less than the current limiting value of the walking motor, the input current of the cutter motor is continuously equal to or greater than the current limiting value of the cutter motor and the output value of the battery pack is less than the maximum discharging capacity, the current limiting value of the cutter motor and the maximum rotating speed of the cutter motor are reset according to the maximum discharging capacity of the battery pack.

In some embodiments, if the input current of the walking motor is continuously less than the current limiting value of the walking motor, the input current of the cutter motor is continuously equal to or greater than the current limiting value of the cutter motor, and the output value of the battery pack is less than the maximum discharging capacity, the current limiting value of the cutter motor is increased and the maximum rotating speed of the cutter motor is decreased to increase the output power and an output torque of the cutter motor.

In some embodiments, if the input current of the walking motor is continuously equal to or greater than the current limiting value of the walking motor, and the output value of the battery pack is equal to or greater than the maximum discharging capacity, the current limiting values and maximum rotating speeds are maintained, and the current slope is displayed as being too large on an output interface of the outdoor power equipment.

In some embodiments, if the input current of the walking motor is continuously less than the current limiting value of the walking motor, the input current of the cutter motor is continuously equal to or greater than the current limiting value of the cutter motor, and the output value of the battery pack is equal to or greater than the maximum discharging capacity, the current limiting values and maximum rotating speeds are maintained, and a current lawn condition is displayed as being poor on an output interface of the outdoor power equipment.

In some embodiments, the initial current limiting value of each of the cutter motor and the walking motor is an average value of all previous current limiting values correspondingly, and the initial maximum rotating speed of each of the cutter motor and the walking motor is an average value of all previous maximum rotating speeds correspondingly.

In some embodiments, if the input current of the cutter motor is less than the current limiting value of the cutter motor and the input current of the walking motor is less than the current limiting value of the walking motor, the current limiting values and the current maximum rotating speeds are maintained.

In some embodiments, after resetting the current limiting value and the maximum rotating speed of the walking motor and/or the cutter motor, the control method of the outdoor power equipment includes:
determining whether the input current of the walking motor and the cutter motor is less than the current limiting value; and
cyclically regulating the current limiting value and the maximum rotating speed of the cutter motor and/or the walking motor until the input current of the cutter motor and/or the walking motor is less than the current limiting value if the input current of the cutter motor and/or the cutter motor and/or the walking motor is continuously equal to or greater than the current limiting value, or displaying an alarm on an output interface of the outdoor power equipment if the input current of the cutter motor and/or the walking motor is continuously equal to or greater than the current limiting value.

In some embodiments, if the input current of the walking motor is continuously equal to or greater than the current limiting value of the walking motor, the current limiting value of the walking motor is first regulated to enable the current limiting value of the walking motor to be less than the current limiting value, and then it is determined whether the input current of the cutter motor is continuously equal to or greater than the current limiting value of the cutter motor.

In some embodiments, when a mowing height is higher, and/or a speed of the outdoor power equipment is greater, and/or when there is a lawn collecting function, the current limiting value of the cutter motor is greater.

In some embodiments, a time threshold of determining that the input current of the walking motor and/or the cutter motor is continuously equal to or greater than the current limiting value is from 180ms to 220ms.

In some embodiments, if the outdoor power equipment is in a basic mode, the control method of the outdoor power equipment includes:

setting the current limiting value and the maximum rotating speed of each of the cutter motor and the walking motor correspondingly according to a physical performance thereof.

In some embodiments, if the outdoor power equipment is in a preset mode, the control method of the outdoor power equipment includes:
setting the current limiting value and the maximum rotating speed of each of the cutter motor and the walking motor correspondingly according to information input through an input interface of the outdoor power equipment and the physical performance of the cutter motor and the walking motor.

In some embodiments, if the outdoor power equipment is in the preset mode, a maximum speed and the current limiting value of a mowing motor are set according to information such as a lawn type, a mowing height, and whether the lawn is collected.

One or more embodiments of the disclosure provide the outdoor power equipment, which includes a cutter assembly, a walking assembly, an information collection assembly and a control assembly.

The cutter assembly includes the cutter motor.

The walking assembly includes the walking motor.

The information collection assembly monitors the input current of each of the cutter motor and the walking motor in the cutter assembly and the walking assembly respectively.

The control assembly is electrically connected with the cutter assembly, the walking assembly and the information collection assembly.

If the outdoor power equipment is in a dynamic mode, the control assembly is configured to determine the corresponding initial current limiting values and the maximum rotating speeds of the cutter motor and the walking motor according to the previous mowing data, and determines whether the input current of each of the cutter motor and the walking motor is less than the corresponding current limiting value.

If the input current of the walking motor is continuously equal to or greater than the current limiting value of the walking motor and the output value of the battery pack is less than the maximum discharging capacity, the control assembly is configured to set the current limiting values and the maximum rotating speeds of the walking motor and the cutter motor according to the current slope of the outdoor power equipment and the maximum discharging capacity of the battery pack.

In some embodiments, the outdoor power equipment further includes the output interface.

The input interface is arranged on the outdoor power equipment and if the outdoor power equipment is in a preset mode, is configured to set the current limiting values and the maximum rotating speeds of the cutter motor and the walking motor according to information input through the input interface and the physical performance of the cutter motor and the walking motor.

In some embodiments, the outdoor power equipment further includes the input interface.

The output interface is arranged on the outdoor power equipment. If the input current of the walking motor is continuously equal to or greater than the current limiting value of the walking motor, and an output value of the battery pack is equal to or greater than the maximum discharging capacity, the control assembly is configure to maintain the current limiting value and the maximum rotating speed, and the output interface is configured to display the current slope on the output interface as being too large. If the input current of the walking motor is continuously less than the current limiting value of the walking motor, the input current of the cutter motor is continuously equal to or greater than the current limiting value of the cutter motor, and the output value of the battery pack is equal to or greater than the maximum discharging capacity, the control assembly is configured to maintain the current limiting value and the maximum rotating speed, and the output interface is configured to display the current lawn condition on the output interface as being bad.

In some embodiments, the outdoor power equipment includes at least one battery pack.

If the input current of the walking motor or the cutter motor is equal to or greater than the current limiting value, the control assembly is configured to determine whether the output value of the battery pack is equal to or greater than the maximum discharging capacity;

If the input current of the walking motor is continuously equal to or greater than the current limiting value and an output value of a battery pack is less than the maximum discharging capacity, the control assembly is configured to reset the current limiting values and the maximum rotating speeds of the walking motor and the cutter motor according to the current slope of the outdoor power equipment and the maximum discharging capacity of the battery pack.

If the input current of the walking motor is continuously less than the current limiting value, the input current of the cutter motor is continuously equal to or greater than the current limiting value and an output value of the battery pack is less than the maximum discharging capacity, the control assembly is configured to reset the current limiting value and the maximum rotating speed of the cutter motor according to the maximum discharging capacity of the battery pack.

In some embodiments, the outdoor power equipment further includes a power lithium battery, a voltage converter, a battery management system, a power switch assembly, a current sensor, a high-voltage power connector and a plurality of controllable switches.

A power switch assembly includes an OFF port, an ACC port and a START port. Normally open switches are arranged between the OFF port and the ACC port, and between the ACC port and the START port, and a rebound switch is provided between the ACC port and the START port.

A first controllable switch and the current sensor are respectively connected in series in a power supply loop of the power lithium battery and the high-voltage power connector.

A power supply output end of the power lithium battery is connected with the OFF port and a power supply input end of the voltage converter respectively.

The power supply output end of the voltage converter is connected with a power supply input end of the BMS battery management system, an enable port of the voltage converter is respectively connected with a first end of a second controllable switch and the START port, and a second end of the second controllable switch is connected with the ACC port.

Control ends of the first controllable switch and the second controllable switch, and a signal output end of the current sensor are respectively connected with the BMS battery management system.

In some embodiments, the outdoor power equipment further includes a circuit protection device. The circuit protection device is connected in series in the power supply loop of the power lithium battery and the high-voltage power connector.

In some embodiments, the circuit protection device includes a fuse, a fusible line or a circuit breaker.

In some embodiments, the outdoor power equipment further includes a low-voltage communication connector, and the BMS battery management system obtains a gear signal of the power switch assembly through the low-voltage communication connector.

In some embodiments, the low-voltage communication connector is a metal connector or a plastic connector.

In some embodiments, the current sensor is connected in series in a circuit line between a negative electrode of the power lithium battery and a negative electrode of the high-voltage power connector.

In some embodiments, the current sensor includes a Hall current sensor, a resistance shunt, a current transformer or a fluxgate current sensor.

In some embodiments, the first controllable switch includes a relay, a field effect transistor, a silicon controlled rectifier, a thyristor or a switching transistor.

In some embodiments, the second controllable switch includes the relay, the field effect transistor, the silicon controlled rectifier, the thyristor or the switching transistor.

In some embodiments, the second controllable switch is arranged inside the BMS battery management system.

One or more embodiments of the disclosure further provide a connecting structure for a diagnosis of the outdoor power equipment, which includes a bus connector and a plurality of communication connectors.

The bus connector is connected with the outdoor power equipment, and is provided with a plurality of first communication ports.

The communication connector is provided with a second communication port, and the second communication port corresponds to and matches the first communication port.

In some embodiments, the plurality of the communication connectors includes a power device connector, a battery debugging connector and a charger fast charging connector.

In some embodiments, the power device connector, the battery debugging connector and the charger fast charging connector are CAN connectors.

In some embodiments, the bus connector is provided with a first CANL communication port and a first CANH communication port. The CAN connector includes a second CANL communication port and a second CANH communication port. The first CANL communication port corresponds to and matches the second CANL communication port, and the first CANH communication port corresponds to and matches the second CANH communication port.

In some embodiments, the CAN connector is a DB9 connector, and the second CANL communication port and the second CANH communication port are arranged on corresponding pins of the DB9 connector.

In some embodiments, a baud rate range of communication data received or output by the first communication port and the second communication port is from 125K to 500K.

In some embodiments, the connecting structure for the diagnosis of the outdoor power equipment further includes a power supply connector. The bus connector is provided with a first electrical port. The power supply connector is provided with a second electrical port. The second electrical port corresponds to and matches the first electrical port.

In some embodiments, the first electrical port is provided with a first positive voltage electrical port and a first negative voltage electrical port, and the second electrical port is provided with a second positive voltage electrical port corresponding to the first positive voltage electrical port, and a second negative voltage electrical port corresponding to the first negative voltage electrical port.

In some embodiments, the power connector is a DC regulation power supply connector.

In some embodiments, a voltage received and output by the first positive voltage electrical port and the second positive voltage electrical port is +12V, and a voltage received and output by the first negative voltage electrical port and the second negative voltage electrical port is -12V.

In some embodiments, the plurality of communication connectors includes at least one walking writing connector, which corresponds to a walking control unit of the outdoor power equipment. The first communication port on the bus connector is provided with a plurality of first connection ports, and the second communication port on the walking writing connector is provided with a plurality of second connection ports corresponding to the plurality of the first connection ports.

In some embodiments, the plurality of the first connection ports or the second connection ports include a ground connection port, an electrical port and at least one communication port.

In some embodiments, the bus connector is provided with a plurality of ports, and the plurality of port includes the first positive voltage electrical port and the first negative voltage electrical port of the first electrical port and the plurality of first communication ports.

In some embodiments, on the bus connector, the first positive voltage electrical port and the first negative voltage electrical port are arranged at intervals with the plurality of first communication ports.

one or more embodiments of the disclosure further provide a diagnostic device of the outdoor power equipment. The diagnostic device of the outdoor power equipment is connected with the outdoor power equipment through the connecting structure and performs a data communication with the outdoor power equipment. The connecting structure includes the bus connector and a plurality of the communication connectors.

The bus connector is connected with the outdoor power equipment, and is provided with the first electrical port and the plurality of first communication ports.

The communication connector is provided with the second communication ports, and the second communication port corresponds to and matches the first communication port.

The outdoor power equipment of one or more embodiments of the disclosure is provided with a plurality of working modes. Different working modes may be selected according to different lawn conditions and site slopes. When the mower is in a dynamic mode, the output power and the output torque between the walking assembly and the cutter assembly may be automatically adjusted. When the slope of the mower is too steep, the output power and output torque of the cutter motor may be sacrificed to ensure a climbing ability of the mower. When the ground is flat and the lawn condition is bad, the output power and output torque of the walking motor may be sacrificed to ensure a mowing effect when the mower is on a flat ground and heavily loaded. This enables the mower to optimize its working efficiency to the maximum extent according to the slope and lawn conditions of the mower so as to keep the whole machine in the best performance state. At the same time, this outdoor power equipment solves a problem of users forgetting to turn off the key of the mower, causing the system to consume electricity. It improves a self-protection performance of an entire lithium battery system, solves customers' problems of difficult repairs and high maintenance costs, improves working efficiency, reduces manufacturer's after-sales frequency and maintenance costs, and has good economic and social benefits. Furthermore, the connecting structure and diagnostic device used for the diagnosis of the outdoor power equipment have advantages of small size, easy to carry, simple operation, and clear information display, which enables it to be more convenient for users to perform an online configuration, information reading, fault diagnosis, etc. of the power device. Therefore, one or more embodiments of the disclosure effectively overcome some practical problems in the prior art, thereby having high utilization value and use significance.

Of course, any product implementing the disclosure does not necessarily need to achieve all of the advantages described above at the same time.

### BRIEF DESCRIPTION OF THE DRAWINGS

In order to explain technical solutions of embodiments of the disclosure more clearly, the following will briefly introduce drawings used in a description of the embodiments or the conventional art. Obviously, the drawings in the following description are only some embodiments of the disclosure. For those of ordinary skill in the art, other drawings may be obtained based on these drawings without creative work.
FIG. 1 is a structural view of a mower according to at least one embodiment of the disclosure.
FIG. 2 is a bottom structural view of the mower in FIG. 1.
FIG. 3 is a schematic structural view of an energy supply assembly of the mower in FIG. 1.
FIG. 4 is a schematic electrical connection view of the mower according to at least one embodiment of the disclosure.
FIG. 5 is a flowchart of a control method of the mower in a basic mode according to at least one embodiment of the disclosure.
FIG. 6 is a flowchart of the control method of the mower in a preset mode according to at least one embodiment of the disclosure.
FIG. 7 is a flowchart of the control method of the mower in a dynamic mode according to at least one embodiment of the disclosure.
FIG. 8 is a first schematic connection view of the mower according to at least one embodiment of the disclosure.
FIG. 9 is a second schematic electrical connection view of the mower according to at least one embodiment of the disclosure.
FIG. 10 is a schematic view of a connecting structure used for a diagnosis of the outdoor power equipment according to at least one embodiment of the disclosure.
FIG. 11 is a schematic structural view of a port of a bus connector of the connecting structure used for the diagnosis of the outdoor power equipment according to at least one embodiment of the disclosure.
FIG. 12 is a schematic structural view of a port of a power supply connector of the connecting structure used for the diagnosis of the outdoor power equipment according to at least one embodiment of the disclosure.
FIG. 13 is schematic structural view of a port of a power device connector of the connecting structure used for the diagnosis of the outdoor power equipment according to at least one embodiment of the disclosure.
FIG. 14 is a schematic structural view of a port of a battery debugging connector of the connecting structure used for the diagnosis of the outdoor power equipment according to at least one embodiment of the disclosure.
FIG. 15 is a schematic structural view of a port of a charger fast charging connector of the connecting structure used for the diagnosis of the outdoor power equipment according to at least one embodiment of the disclosure.
FIG. 16 is a schematic structural view of a port of a first walking writing connector of the connecting structure used for the diagnosis of the outdoor power equipment according to at least one embodiment of the disclosure.
FIG. 17 is a schematic structural view of a port of a second walking writing connector of the connecting structure used for the diagnosis of the outdoor power equipment according to at least one embodiment of the disclosure.

### DETAILED DESCRIPTION

Technical solutions in the embodiments of the disclosure will be clearly and completely described below in conjunction with drawings in the embodiments of the disclosure. Obviously, the described embodiments are only part of the embodiments of the disclosure, rather than all of the embodiments. Based on the embodiments in this disclosure, all other embodiments obtained by ordinary technicians in this field without making any creative work shall fall within a protection scope of this disclosure.

### Embodiment 1

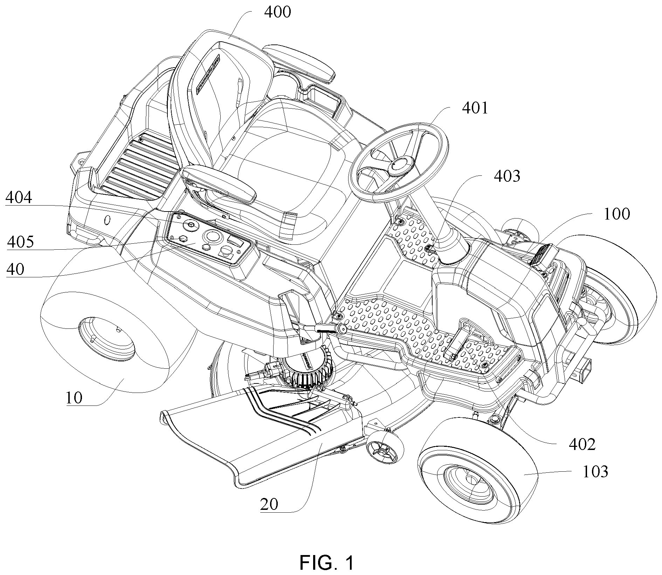

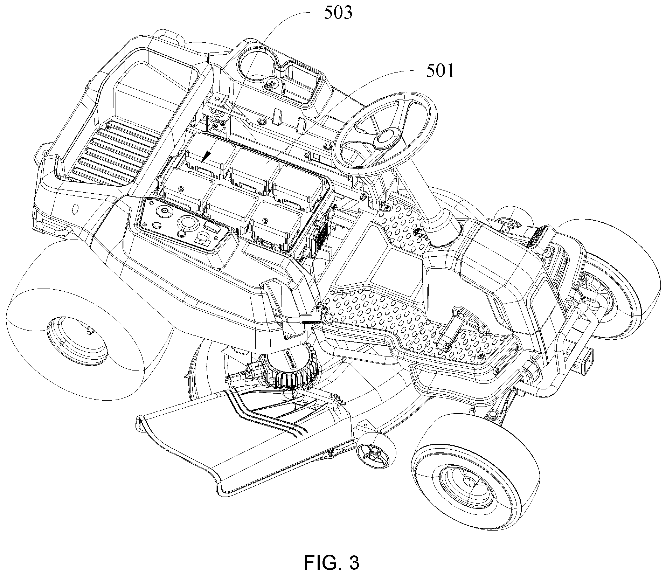

Please refer to FIG. 1 through FIG. 4. The disclosure provides an outdoor power equipment, such as a mower. The mower includes a vehicle frame 100, a walking assembly 10, a cutter assembly 20, a control assembly 30 and a human-machine interaction assembly 40. The walking assembly 10, the cutter assembly 20, the control assembly 30, and the human-machine interaction assembly 40 are fixed on the vehicle frame 100. A user inputs an instruction through the human-machine interaction assembly 40, and the control assembly 30 transmits the instruction to the cutter assembly 20 and the walking assembly 10, and adjusts the cutter assembly 20 and the walking assembly 10 to achieve a mowing function.

Please refer to FIG. 1 through FIG. 3. In an embodiment of the disclosure, a seat 400 is fixed on the vehicle frame 100, and the cutter assembly 20 is arranged on the frame 100 and faces a ground. The disclosure does not limit a specific position of the cutter assembly 20. In this embodiment, the cutter assembly 20 is located in a middle part of the mower, for example. In other embodiments, the cutter assembly 20 is for example located at a front end of the mower, or may be located at a tail part of the mower. In this embodiment, the cutter assembly 20 includes, for example, a cutter capable of mowing, and includes, for example, a first cutter 203 and a second cutter 204 that may work independently. In other embodiments, one or more cutters may be provided, and each cutter may work independently. The cutter is arranged in a protective cover 205 to prevent lawn clippings from flying out when mowing. A cutter motor connected with the cutter is further mounted on the vehicle frame 100, and includes, for example, a first cutter motor 201 for driving the first cutter 203 to rotate, and a second cutter motor 202 for driving the second cutter 204 to rotate. The walking assembly 10 includes a front wheel assembly and a rear wheel assembly arranged on the vehicle frame 100. The front wheel assembly includes a rotating wheel 103 arranged and mounted at a front end of the frame 100, and a steering mechanism (not shown) for controlling the rotating wheel 103. In this embodiment, the rotating wheel 103 is for example a universal wheel, and is a smooth universal wheel, which may effectively prevent the rotating wheel 103 from affecting a working ground when rotating. The rear wheel assembly is arranged on both sides of a rear end of the frame 100 and includes a first driving wheel 104 and a second driving wheel 105. The vehicle frame 100 is further equipped with a first walking motor 101 for driving the first driving wheel 104 to walk and a second walking motor 102 for driving the second driving wheel 105 to walk.

Please refer to FIG. 1 through FIG. 4. In an embodiment of the disclosure, the control assembly 30 is integrated on the vehicle frame 100, and the control assembly 30, for example, includes a first cutter controller 303 electrically connected with the first cutter motor 201, a second cutter controller 304 electrically connected with the second cutter motor 202, a first walking controller 301 electrically connected with the first walking motor 101, and a second walking controller 302 electrically connected with the second walking motor 102. In an embodiment, the cutter controller may adjust a rotating speed and an input current of the cutter motor, thereby controlling a rotating speed and an output torque of the cutter. The walking controller may adjust a rotating speed and an input current of the walking motor, thereby controlling a rotating speed and an output torque of the driving wheel. In this embodiment, the control assembly 30 may further include a main controller, which may adjust the input current and the rotating speed of each motor according to information collected by an information collection assembly, information input by a human-machine interaction device, information in a battery pack management unit and parameter information in each controller to control a start, a stop and a speed regulation of the motor. The control assembly 30 may also control a display of the human-machine interaction device and a maximum output power of each motor. The main controller may be set up independently or integrated with other controllers. In this embodiment, the main controller is for example integrated in the first walking controller 301.

Please refer to FIG. 1 through FIG. 3. In an embodiment of the disclosure, the human-machine interaction assembly 40 includes a steering wheel 401 arranged on a machine body. The steering wheel 401 is connected with the rotating wheel 103 through the steering mechanism. When the steering wheel 401 is turned, a direction of the rotating wheel 103 may be adjusted, thereby adjusting a forward direction of the mower. The human-machine interaction assembly 40 further includes a starting assembly and a braking assembly. The starting assembly includes a pedal 402 and a starting mechanism (not shown in the figure), and the starting mechanism may be controlled by stepping on the pedal to generate a mechanical action. For example, an accelerator may be used to convert a mechanical signal into an electrical signal to start the mower and make a response action. The braking assembly includes, for example, a parking handle 403 and/or a foot brake (not shown in the figure). Through pulling the parking handle 403 and/or the foot brake, the mower may be braked in an emergency. In this embodiment, the parking handle 403 is for example arranged below the steering wheel 401. In other embodiments, the parking handle 403 may be arranged at a side of the seat 400. An input interface 404 and an output interface 405 are further arranged on the mower. The input interface 404 may be, for example, a plurality of input buttons or a display screen with an input function. The output interface 405 may be, for example, a plurality of display lights of different colors, or a display screen with an output function. The input interface 404 and the output interface 405 may be arranged at a same position or may be arranged independently of each other. In this embodiment, the input interface 404 and the output interface 405 are for example arranged at the side of the seat 400. In other embodiments, the input interface 404 and the output interface 405 are, for example, a screen or other operating terminal arranged in front of a driver.

Please refer to FIG. 1 through FIG. 4. In an embodiment of the disclosure, the mower further includes an energy supply assembly. The energy supply assembly includes at least one battery pack 501 and a battery pack management unit 502 arranged corresponding to the battery pack 501. A battery pack accommodating cavity 503 is arranged on the vehicle frame 100 and at a bottom of the seat 400. The battery pack 501 is arranged in the battery pack accommodating cavity 503 and is detachably connected in the battery pack accommodating cavity 503, so that the battery pack 501 may be easily replaced. A plurality of battery packs 501 may be divided into different power supply units to respectively supply power for electrical components of the mower, such as the cutter assembly 20, the walking assembly 10 and the control assembly 30. In order to ensure a management among various electrical units, the battery pack management unit 502 is arranged, which may adjust an output voltage and an output current of different power supply units to adjust an input current and an input voltage of various electrical components in the mower.

Please refer to FIG. 1 through FIG. 4. In an embodiment of the disclosure, the mower further includes a plurality of information collection assemblies, for example, and a plurality of current sensors mounted at input ends or output ends of the electrical components, which may feedback a current of each electrical component in the mower to the battery pack management unit 502. The battery pack management unit 502 may dynamically adjust an output of each motor according to information fed back by a signal collection assembly so that the mower may work normally. In this embodiment, a first current sensor 601 is connected in series with input ends of the first walking motor 101 and the second walking motor 102, for example, to monitor input currents of the first walking motor 101 and the second walking motor 102 in real time. The first walking motor 101 and the second walking motor 102 are both driving wheel motors. To ensure that rotating speeds of the first driving wheel 104 and the second driving wheel 105 are the same, electrical parameters of the first walking motor 101 and the second walking motor 102 are set to be the same. In an embodiment, the electrical parameters include a phase current, a bus current, an output power, and the rotating speed of the motor. A second current sensor 602 is connected in series with an input end of the first cutter motor 201, and a third current sensor 603 is connected in series with an input end of the second cutter motor 202, so as to monitor input currents of the first cutter motor 201 and the second cutter motor 202 in real time. A fourth current sensor 604 is further arranged at an output end of the battery pack management unit to monitor an output current of the energy supply assembly in real time to prevent an output value of the battery pack 501 from exceeding its maximum discharging capacity.

Please refer to FIG. 1 through FIG. 4. In an embodiment of the disclosure, the information collection assembly further includes other sensors arranged on the mower, such as a slope sensor 605 that may measure a slope of the vehicle frame 100 and a speed sensor 606 that may measure a speed. The slope sensor 605 may monitor a slope of the mower in real time. When the slope or the speed exceeds a threshold, an emergency braking function may be activated and an alarm may be sounded. The speed sensor 606 may monitor the speed of the mower in real time and transmit speed information to the main controller.

Please refer to FIG. 1 through FIG. 2. In an embodiment of the disclosure, a lawn collection bag (not shown in the figure) may also be mounted at a lawn outlet of the mower. The lawn collection bag may be detachably mounted on a tail part of the mower, for example, it may be hung on the tail part of the mower through a hook. When the lawn collection bag is not needed, the lawn collection bag may be removed. The lawn collection bag may be connected through a tube so that lawn clippings may be collected in the lawn collection bag. A blocking plate 206 is further arranged at the lawn outlet. When the blocking plate 206 is opened, the lawn collection bag may be connected to the lawn outlet of the mower, and the mower discharges lawn. When the blocking plate 206 is closed, the mower crushes the lawn, which may prevent lawn clippings from flying out during crushing.

Please refer to FIG. 1. The mower of the disclosure has a plurality of working modes. For example, it may include a basic mode, a preset mode and a dynamic mode. The user may adjust the working mode of the mower according to a lawn condition and a state of the lawn, so that the cutter assembly 20 and the walking assembly 10 of the mower are in a best performance state.

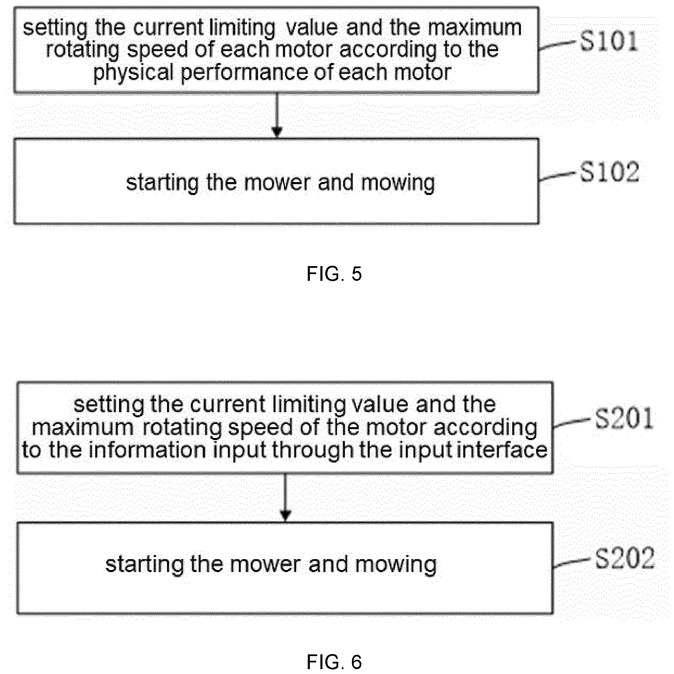

Please refer to FIG. 5. In an embodiment of the disclosure, when the mower is in the basic mode, the control method of the mower includes S101 and S102.

S101, setting a current limiting value and a maximum rotating speed of each motor according to a performance of each motor.

S102, starting the mower and mowing.

Please refer to FIG. 1 through FIG. 5. In an embodiment of the disclosure, when the mower is in basic mode, the current limiting values and the maximum rotating speeds of the cutter motor and the walking motor are fixed values, and phase currents and bus currents of the cutter motor and the walking motor may be determined based on factors such as a temperature rise, a rated torque and a rated output power of each motor under different currents. The maximum rotating speeds of the cutter motor and the walking motor may be determined, for example, based on factors such as a high-efficiency rotating speed range and an energy consumption of each motor. This ensures that the walking assembly 10 and the cutter assembly 20 of the mower are in a high efficient state. Therefore, the current limiting values and the maximum rotating speeds of the cutter motor and the walking motor are only set according to the physical performances of each motor. During an operation of the mower, the current limiting values and the maximum rotating speeds of the cutter motor and the walking motor are fixed values. After the mower starts mowing, the user may input operating instructions to the mower through the human-machine interaction assembly 40, so that the mower works according to the input instructions. If the mower fails during a mowing process, an alarm may be displayed on the output interface 405. The basic mode of the disclosure is suitable for lawn lands with a flat site and a single lawn type.

Please refer to FIG. 1, FIG. 3 and FIG. 5. In an embodiment of the disclosure, when the mower is in the preset mode, the user may input lawn type information, mowing height information, site type information, mowing area information, whether to collect the lawn and other related information on the input interface 404. The mower may set a maximum output power, a maximum output torque and the maximum rotating speed of the walking motor and a maximum output power, a maximum output torque and the maximum rotating speed of the cutter motor according to the various information provided by the input interface 404. A minimum battery power or a number of battery packs 501 required to complete a mowing task, a mowing time, a most economical mowing speed, etc. may further be obtained according to the information input in the input interface 404. When the mower is in the preset mode, the control method of the mower includes S201 and S202.

S201, setting the current limiting value and the maximum rotating speed of the motor according to information input through an input interface.

S202, starting the mower and mowing.

Please refer to FIG. 1, FIG. 3 and FIG. 5. In an embodiment of the disclosure, after obtaining lawn condition information and site information, required power may be obtained based on average power consumption information and mowing area information of the mower in a specific site and lawn condition, which means that the required power = the mowing area × the average power consumption. In an embodiment, the mowing area is calculated in acres and the average power consumption is the average power consumption per acre. The required number of battery packs 501 may be obtained according to a capacity of each battery pack 501, which means that the number of battery packs 501 = the required power / the capacity of each battery pack 501. The currently required mowing time may also be input in the input interface 404, and the mower obtains the mowing speed according to the required mowing time, which means that the mowing speed = the mowing area / the required mowing time. In this embodiment, when the lawn type, the mowing height, the speed of the mower, and lawn collection requirements are different, the current limiting value of the mower is different, as shown in Table 1 for details.

**Table 1 Comparison of the current limiting values of the cutter motors under different conditions**

| Cutting deck width | Mowing conditions | Evergreen lawn and the mower with no lawn collection function | | Evergreen lawn and the mower with the lawn collection function | Tall fescue and the mower with no lawn collection function |
|---|---|---|---|---|---|
| | Mowing height | Speed | Bus current limiting value (A) | Bus current limiting value (A) | Bus current limiting value (A) |
| | 1.5inch | 3mph | 25 | 30 | 25 |
| | | 4mph | 25 | 30 | 28 |
| | | 5mph | 25 | 30 | 28 |
| 42inch (side lawn discharging) | | 6mph | 30 | 35 | 30 |
| | 2inch | 3mph | 32 | 35 | 35 |
| | | 4mph | 32 | 35 | 35 |
| | | 5mph | 35 | 40 | 37 |
| | | 6mph | 35 | 40 | 37 |

Please refer to FIG. 1. In an embodiment of the disclosure, the current limiting value of the cutter motor is different for different lawn types. The mower may set the current limiting value based on the lawn types, for example, the current limiting value when cutting tall fescue is higher than the current limiting value when cutting evergreen lawn. When the lawn collection function is provided, the current limiting value of the cutter motor may be increased to ensure that the lawn clippings are thrown into the lawn collection bag smoothly. Please refer to Table 1. The higher the mowing height, the greater the current limiting value of the cutter motor. The higher the speed of the mower, the greater the current limiting value of the cutter motor. This ensures that weeds may be effectively mowed when the mowing height is high and the speed is high.

Please refer to FIG. 1 and FIG. 5. In an embodiment of the disclosure, when the mower is in the preset mode, the maximum rotating speed and the current limiting value of the mower may be set according to information such as the lawn type, the mowing height, whether the lawn is collected, etc., so that the mower is in an economical or efficient mode. At this time, the current limiting values and the maximum rotating speeds of the cutter motor and the walking motor are obtained by combining the physical performances of the motors and various information inputted from the input interface 404, and the current limiting values and the maximum rotating speeds of the cutter motor and the walking motor do not exceed limiting values in the physical performances. During the operation of the mower, the current limiting values and the maximum rotating speeds of the cutter motor and the walking motor are fixed values. After starting the mower, the user may input the operating instructions to the mower through the human-machine interaction assembly 40, so that the mower works according to the input instructions. If the mower fails during the mowing process, the alarm may be displayed on the output interface 405. The preset mode of the disclosure is suitable for lawn lands with the flat site and a single lawn type or a plurality of lawn types.

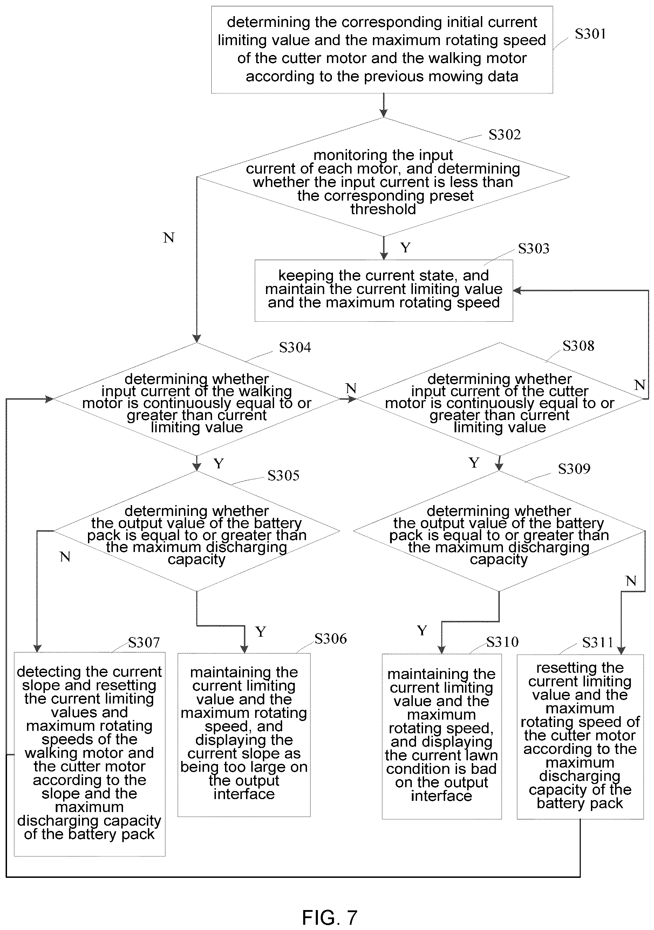

Please refer to FIG. 1 and FIG. 7. In an embodiment of the disclosure, when the mower is in the dynamic mode, the cutter motor and walking motor may flexibly regulate the current limiting values and the maximum rotating speeds according to changes in working conditions. This ensures a flexible weeding when the lawn conditions, site conditions and other working conditions change. For example, when climbing the slope, the current limiting value and the rotating speed of the walking motor may be increased to increase the maximum power and the output torque of the walking assembly 10. When mowing, the current limiting value and the rotating speed of the cutter motor are increased to increase the maximum output power and the output torque of the cutter assembly 20. When the mower is in the dynamic mode, the control method of the mower includes S301 and S311.

S301, determining the corresponding initial current limiting values and the maximum rotating speeds of the cutter motor and the walking motor according to the previous mowing data.

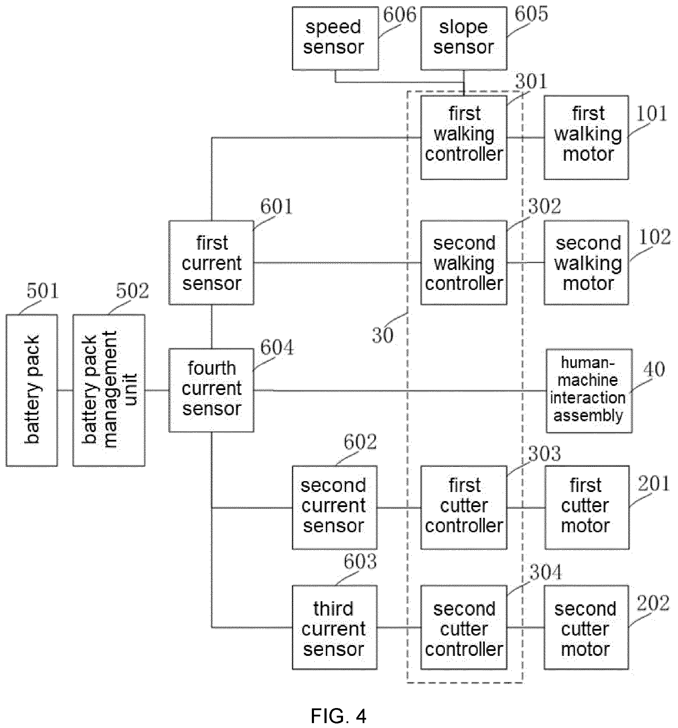

Please refer to FIG. 4 and FIG. 7. In an embodiment of the disclosure, a plurality of storage units (not shown in the figure) is arranged in the mower. The plurality of storage units may be arranged in each controller or may be arranged independently. When the storage unit is independently arranged, it is electrically connected with the corresponding controller. In this embodiment, for example, one storage unit is arranged in each of the first walking controller 301, the second walking controller 302, the first cutter controller 303 and the second cutter controller 304. The storage unit stores information such as the previous current limiting values and the previous maximum rotating speeds of the corresponding cutter motor and walking motor. When the mower is in the dynamic mode, average values of the previous current limiting values and the previous maximum rotating speeds of the cutter motor and the walking motor are obtained as the current limiting values and the maximum rotating speeds of the cutter motor and the walking motor respectively, and as the initial current limiting value and the initial maximum rotating speed.

Please refer to FIG. 4 and FIG. 7. It is worth noting that in this embodiment, the current limiting value and the maximum rotating speed of the first walking motor 101 and the second walking motor 102 are the same, while the current limiting value and the maximum rotating speed of the first cutter motor 201 and the second cutter motor 202 may be different or the same.

S302, monitoring the input current of each motor, and determining whether the input current of each motor is less than the corresponding preset threshold. When the input current of each motor is less than a preset threshold, S303 is executed to keep a current state, and maintain the current limiting value and the maximum rotating speed. When the input current of the walking motor or the cutter motor is equal to or greater than the threshold, a dynamic response mode of the working condition is entered.

Please refer to FIG. 4 and FIG. 7. In an embodiment of the disclosure, the first current sensor 601 is used to monitor input currents of the first walking motor 101 and the second walking motor 102, and a current of the first current sensor 601 is a sum of the input currents of the first walking motor 101 and the second walking motor 102. During monitoring, a current value of the first current sensor 601 may be divided by 2 and then compared with the current limiting values stored in the first walking controller 301 and the second walking controller 302. The second current sensor 602 is used to monitor an input current of the first cutter motor 201, and the third current sensor 603 is used to monitor an input current of the second cutter motor 202. The input current of the first cutter motor 201 is compared with an initial current limiting value of the first cutter controller 303, and the input current of the second cutter motor 202 is compared with an initial current limiting value of the second cutter controller 304. When the input current of each motor is less than the corresponding initial current limiting value of each controller, the initial current limiting value and the initial maximum rotating speed are kept unchanged. When the input current of one of motors is equal to or greater than the initial current limiting value, the dynamic response mode of the working condition is entered.

Please refer to FIG. 7. In an embodiment of the disclosure, when entering the dynamic response mode, the control method of the mower includes:

S304, determining whether the input current of the walking motor is continuously equal to or greater than the current limiting value. When the input current of the walking motor is continuously equal to or greater than the current limiting value, S305 is executed. When the input current of the walking motor is not continuously equal to or greater than the current limiting value, S308 is executed.

Please refer to FIG. 7. In S304, when determining for the first time whether the input current of the walking motor is continuously equal to or greater than the current limiting value, the current limiting value is the initially set current limiting value. When a cycle returns to S304 again, the current limiting value is reset according to a cycle process.

Please refer to FIG. 7. In an embodiment of the disclosure, in S304 and subsequent operations, it is necessary to determine whether the input current of the motor is continuously equal to or greater than the current limiting value, which means determining whether a time during which the input current of the motor is equal to or greater than the current limiting value is equal to or greater than the threshold. In the disclosure, a time threshold when the input current of the motor is equal to or greater than the current limiting value is greater than a filtering time of a system current collection and is less than or equal to an action time of the whole mower. In this embodiment, the time threshold when the input current of the motor is equal to or greater than the initial current limiting value is, for example, from 180ms to 220ms, specifically, 200ms. A setting of the time threshold may ensure that the system can respond quickly when the working conditions change. For example, when the lawn conditions change, the system can respond in time to regulate the maximum current limiting value or the rotating speed of the motor to adjust the maximum output torque to ensure a good mowing effect when a lawn density increases. It may also avoid an impact of clutter and emergencies.

S305, determining whether the output value of the battery pack is equal to or greater than the maximum discharging capacity at this time. If the output value of the battery pack is equal to or greater than the maximum discharging capacity, S306 is executed, the current limiting value and the maximum rotating speed are maintained, and the current slope is displayed as being too large on the output interface. If the output value of the battery pack is less than the maximum discharging capacity, S307 is executed.

S307, detecting the current slope and resetting the current limiting values and maximum rotating speeds of the walking motor and the cutter motor according to a slope and a maximum discharging capacity of the battery pack.

Please refer to FIG. 7. In an embodiment, when the input current of the walking motor is continuously equal to or greater than the current limiting value, it may be determined that the mower is in an uphill or blocked state. At this time, if the output value of the battery pack is equal to or greater than the maximum discharging capacity, the battery pack is in a maximum discharging state and an output cannot be increased any further. The output interface may display alarm information, which means that it may be displayed that the current slope is too large and human assistance is needed to get the mower out of trouble. At this time, if the output value of the battery pack is less than the maximum discharging capacity, the current limiting values and the maximum rotating speeds of the walking motor and the cutter motor may be reset according to a current state of the mower. For example, the output power of the walking motor may be increased and the output power of the cutter motor may be decreased, so that the mower may get out of trouble by itself. In this process, outputs of the cutter motor and the walking motor need to be flexibly regulated according to the current slope of the mower and the maximum discharging capacity of the battery pack.

Please refer to FIG. 7. In an embodiment of the disclosure, the current limiting value and maximum rotating speed of each motor may be set when the mower is on different slopes according to the maximum discharging capacity of the battery pack, the current limiting value and maximum rotating speed of the walking motor and the physical performances of each motor. In a specific embodiment of the disclosure, when the maximum discharging capacity of the battery pack, which means that a maximum output current is, for example, 120A, and a maximum speed is, for example, 8mph, the current limiting value of each motor at different slopes is as shown in Table 2.

**Table 2 Comparison of the current limiting value and the rotating speed of the motors at different slopes and different maximum discharging capacities**

| Maximum discharging capacity of the battery pack 501 (the maximum output current is 120A) | Slope | Maximum speed limiting value (%) | Bus current limiting value of the cutter motor (A) | Bus current limiting value of the walking motor (A) |
|---|---|---|---|---|
| 100% | Flat site | 100% | 100 | 30 |
| | 10% | 80% | 70 | 50 |
| | 16.70% | 50% | 60 | 60 |
| | 20% | 40% | 20∼ 40 | 80∼ 100 |
| 50% | Flat site | 100% | 30 | 30 |
| | 10% | 50% | \ | 60 |
| | 16.70% | 30% | \ | 60 |
| | 20% | 20% | \ | 60 |

Please refer to Table 2. When the slope is different, the current limiting value of each motor may be adjusted in combination with the maximum discharging capacity of the battery pack. When the slope is greater, the speed of the mower decreases, which means that the rotating speed of the walking motor decreases. The current limiting value of the cutter motor is decreased, and the current limiting value of the walking motor is increased. This decreases the input current of the cutter motor and increases the input current of the walking motor. This decreases the output power of the cutter motor and increases the output power of the walking motor. When the rotating speed of the walking motor also decreases, a torque of the walking motor further increases, so that when the slope increases, a traction force increases, and the mower may get out of trouble by itself. When the maximum discharging capacity of the battery pack is low, the current limiting value of the cutter motor may not be limited as the slope increases. This means that when the slope is too large, mowing is not available and the current limiting value of the walking motor is increased to a maximum extent. For example, when the maximum discharging capacity of the battery pack 501 is 50%, and the slope is equal to or greater than 10%, the current limiting value of the cutter motor is not limited, and the current limiting value of the walking motor can reach the maximum.

Please refer to FIG. 1 and FIG. 7. After S307 is executed, a process returns to S304 to detect and determine again whether the input current of the walking motor is continuously equal to or greater than the current limiting value. If the input current of the walking motor is continuously equal to or greater than the reset current limiting value, S304 to S307 are executed in a loop until the set current limiting value meets walking needs of the motor, which means that when the input current is continuously less than the reset current limiting value, or the mower displays on the output interface 405 that the current slope is too large, an assistance is needed.

Please refer to FIG. 7. In an embodiment of the disclosure, in S307, when the input current of the walking motor is continuously less than the current limiting value, S308 is executed, which includes determining whether the input current of the cutter motor is continuously equal to or greater than the current limiting value. When the input current of the cutter motor is continuously equal to or greater than the current limiting value, S309 is executed. When the input current of the cutter motor is not continuously equal to or greater than the current limiting value, S303 is executed to keep the current state, and maintain the current limiting value and the maximum rotating speed.

Please refer to FIG. 7. In an embodiment of the disclosure, during working of the mower, when the input current of the walking motor is continuously less than the current limiting value of the walking motor and the input current of the cutter motor is continuously less than the current limiting value of the cutter motor, the current limiting values of the cutter motor and the walking motor in the mower meet mowing requirements and do not need to be adjusted. At this time, the current limiting values are just maintained. When the input current of the walking motor is continuously equal to or greater than the current limiting value of the walking motor or the input current of the walking motor is continuously equal to or greater than the current limiting value of the walking motor, then according to the maximum discharging capacity of the battery pack and combined with the current slope and a driving speed of the vehicle, while ensuring a walking effect, the current limiting value and the maximum rotating speed of the cutter motor are increased, thereby increasing the output torque of the cutter motor and ensuring a mowing effect of the mower. Details are as follows in S309 to S312.

S309, determining whether the output value of the battery pack is equal to or greater than the maximum discharging capacity at this time. If the output value of the battery pack is equal to or greater than the maximum discharging capacity, S310 is executed, the current limiting values and maximum rotating speeds are maintained, and the current lawn condition is bad is displayed on the output interface. If the output value of the battery pack is less than the maximum discharging capacity, S311 is executed.

S311, resetting the current limiting value and the maximum rotating speed of the cutter motor according to the maximum discharging capacity of the battery pack. After completing S311, return to S304 again.

Please refer to FIG. 1 and FIG. 7. In an embodiment of the disclosure, when the input current of the walking motor is continuously less than the current limiting value of the walking motor, and the input current of the cutter motor is continuously equal to or greater than the current limiting value of the cutter motor, it may be determined that the lawn condition is bad at this time. At this time, if the output value of the battery pack is equal to or greater than the maximum discharging capacity, the battery pack is in the maximum discharging state and the output cannot be increased any further. The output interface 405 may display the alarm information, which indicates that the current lawn condition is bad and it is necessary to manually reduce the mowing height or clean a blade. At this time, if the output value of the battery pack is less than the maximum discharging capacity, the current limiting value and the maximum rotating speed of the cutter motor may be reset according to the maximum discharging capacity of the battery pack. For example, the current limiting value of the cutter motor may be increased and the maximum rotating speed of the cutter motor may be decreased to increase the output power and output torque of the cutter motor so that the mower may achieve a mowing function.

Please refer to FIG. 7. After completing S311, return to S304. A state of the mower is determined in real time based on the current input current of each motor. This enables that when the slope of the mower is too steep, the output power of the cutter motor and output torque of the cutter motor may be sacrificed to ensure a climbing ability of the mower. When the ground is flat and the lawn condition is bad, the output power of the walking motor and the output torque of the walking motor may be sacrificed to ensure a mowing effect when the mower is on a flat ground and heavily loaded.

Please refer to FIG. 1 and FIG. 7. When the mower is in the dynamic mode, in the control method of the mower of the disclosure, if it is detected that the slope of the mower changes significantly or an actual current of the walking motor continues to be close to a maximum current limiting value of a bus, the mower enters a walking priority adjustment mode, increases a maximum bus current limiting value of the walking motor, and decreases the output power of the cutter motor to ensure the climbing ability of the whole vehicle. If the actual value of the walking motor continues to approach the maximum limiting value, it is necessary to display on the output interface 405 that it is necessary to enable the vehicle to be out of trouble manually. If the actual current of the walking motor is always lower than a maximum set value, and the actual bus current of the cutter motor continues to approach the maximum limiting value, the maximum current limiting value, the maximum rotating speed and a maximum output torque of the cutter will continue to increase until the maximum set value of the cutter motor approaches a maximum remaining output capacity of the battery pack. If the actual value still continues to approach the maximum limiting value, the mower will prompt the user to lower a cutter height or clean up debris in the lawn through the output interface 405. Finally, when it is detected that the input currents of the walking motor and the cutter motor are continuously lower than the maximum set values, the main controller will maintain the current limiting value and maximum rotating speed of each motor.

### Embodiment 2

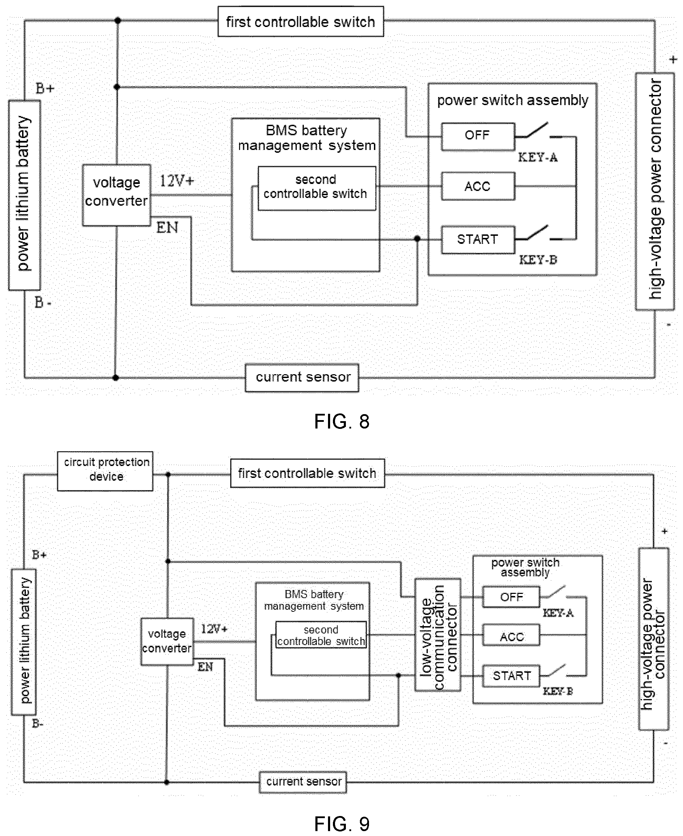

Please refer to FIG. 8. The mower provided in this disclosure is an electric mower. The outdoor power equipment further includes a power lithium battery, a voltage converter, a battery management system, a power switch assembly, a current sensor, a high-voltage power connector and a plurality of controllable switches. In this embodiment, a first controllable switch is connected in series in a power supply loop between the power lithium battery and the high-voltage power connector, and a second controllable switch is connected in series in a power supply loop between the power lithium battery and the voltage converter. The current sensor is used to detect a current of the power supply loop of the mower and transmit it to the BMS battery management system. When the user forgets to turn off a key battery of the mower, the BMS battery management system detects that a current signal of the current sensor is lower than a preset threshold within a preset time, the second controllable switch is disconnected, thereby disconnecting the power supply loop of the mower to prevent the power lithium battery from being fed. It should be understood that the disclosure may further be applied to other electric devices using power lithium batteries, such as hedge trimmers, blowers, chain saws, string trimmers, etc.

To continue explaining, a power supply output end of the power lithium battery is connected with a power supply input end of the high-voltage power connector, and a power assembly is provided to the entire vehicle through the high-voltage power connector. The power supply output end of the power lithium battery is further connected with a power input supply end of the voltage converter. The voltage converter converts a high voltage output by the power lithium battery into a suitable low voltage to provide power for the BMS battery management system and other electrical components of the mower at a back end. It should be understood that a capacity of the power lithium battery is different for the mowers with different power, and the capacity of the power lithium battery is not limited in this embodiment. At the same time, the voltage converter is used to convert the high voltage into the suitable low voltage. There are many mature products in the prior art that may achieve this. For example, in this embodiment, a voltage converter with an output voltage of 12V is selected. In an actual use, a working voltage of the voltage converter may be selected according to rules of the power lithium battery.

The power switch assembly is arranged on a surface of the mower, and the user may start or stop the mower through the power switch assembly. The power switch assembly includes an OFF port, an ACC port and a START port, which respectively correspond to three gears: a shutdown gear, a standby gear and a start gear. Normally open switches are provided between the OFF port and the ACC port, between the ACC port and the START port respectively, and a rebound switch is provided between the ACC port and the START port. In an embodiment, the power switch assembly may be switched by a knob. In a shutdown state, the knob is in an OFF gear. As the knob switches from the OFF end to the ACC end, the normally open switch between the OFF end and the ACC end is closed. At this time, the knob is in the ACC gear and the OFF end and the ACC end are connected with each other. As the knob switches from the ACC end to the START end, the normally open switch between the ACC end and the START end is closed. At this time, the knob is in the START gear and the ACC end and the START end are connected with each other. Since the rebound switch is set between the ACC end and the START end, after a certain period of time, the knob automatically rotates from the START end to the ACC end.

The BMS battery management system is used to monitor a usage state of the power lithium battery, intelligently manages and maintains each battery unit, and prevents the power lithium battery from overcharging, over-discharging, and high temperature. In this embodiment, the BMS battery management system mainly includes a single voltage collecting module, a single temperature collecting module, a total voltage collecting module, a total current collecting module, a signal control loop module, a communication loop module and an internal switch module. It should be understood that the BMS battery management system is a conventional battery management system in the prior art, and is provided with a mature circuit to implement its monitoring function. A specific model of the BMS battery management system is not limited in this embodiment.

Continuing to explain, the first controllable switch is connected in series in the power supply loop between the power lithium battery and the high-voltage power connector, and a control end of the first controllable switch is connected with the BMS battery management system. The current sensor is further connected in series in the power supply loop between the power lithium battery and the high-voltage power connector. A signal output end of the current sensor is connected with the BMS battery management system to detect the current signal of the power supply loop between the power lithium battery and the high-voltage power connector and transmit it to the BMS battery management system. It should be understood that the first controllable switch and the current sensor may be connected in series in a circuit line between a positive electrode of the power lithium battery and a positive electrode of the high-voltage power connector, or in series in a circuit line between a negative electrode of the power lithium battery and a negative electrode of the high-voltage power connector. In this embodiment, the first controllable switch is connected in series in the circuit line between the positive electrodes of the power lithium battery and the high-voltage power connector, and the current sensor is connected in series in the circuit line between the negative electrodes of the power lithium battery and the high-voltage power connector. The current sensor may be selected from a Hall current sensor, a resistance shunt, a current transformer or a fluxgate current sensor.

Continuing to explain, the power supply output end of the voltage converter is connected with the power supply input end of the BMS battery management system, which is used to supply the working voltage for the BMS battery management system. An enabling end of the voltage converter is respectively connected with a first end of the second controllable switch and a START end of the power switch assembly, a second end of the second controllable switch is connected with an ACC end of the power switch assembly, and an OFF end of the power switch assembly is connected with a positive output end of the power lithium battery. A control end of the second controllable switch is connected with the BMS battery management system and is used to disconnect the power supply loop of the voltage converter according to the control signal of the BMS battery management system. In an embodiment, the first controllable switch and the second controllable switch may be selected from a relay, a field effect transistor, a silicon controlled rectifier, a thyristor or a switching transistor. In order to reduce a volume, the BMS battery management system may be improved on a basis of the conventional technology, and the second controllable switch may be integrated inside the BMS battery management system.

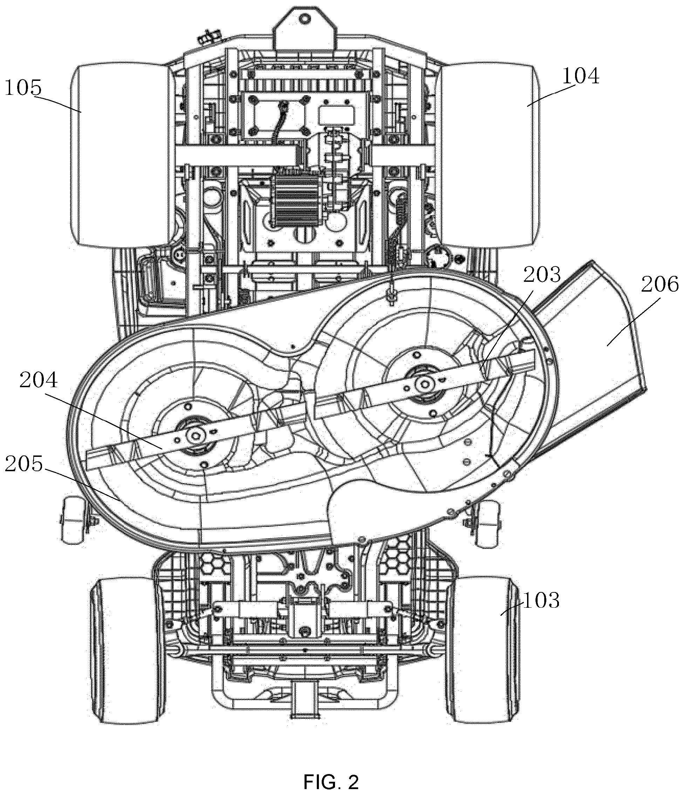

Please refer to FIG. 9. The mower further includes a circuit protection device. The circuit protection device is connected in series in the power supply loop between the power lithium battery and the high-voltage power connector to protect the power supply loop between the power lithium battery and the high-voltage power connector from overcurrent, short circuit, etc. When the overcurrent or the short circuit occurs in the power supply loop, the power supply loop is disconnected. The circuit protection device may be selected from a fuse, a fusible line or a circuit breaker. It should be understood that the circuit protection device in FIG. 2 is connected in series between the power lithium battery and the first controllable switch. This connection method is only an example. In the actual use, the circuit protection device may be located at any suitable position in the power supply loop between the power lithium battery and the high-voltage power connector.

Continuing to explain, the mower further includes a low-voltage communication connector. The BMS battery management system communicates with the power switch assembly through the low-voltage communication connector to obtain a gear signal of the power switch assembly. In addition, the BMS battery management system may further establish a communication connection with a central control system of the mower through the low-voltage communication connector to achieve a data interaction. In an embodiment, the low-voltage communication connector may be a metal connector or a plastic connector.

With the above solution, when the user switches the power switch assembly from the OFF gear to the ACC gear, a switch KEY-A is closed, the mower is in the standby mode, and a positive electrode end of the power lithium battery is connected with the ACC port through the OFF port of the power switch assembly. If the user continues to switch the power switch assembly from the ACC gear to the START gear, a switch KEY-B is closed. At this time, the positive electrode end of the power lithium battery is connected with an enabling end of the voltage converter through the START port. The voltage converter starts working and outputs 12V voltage to the BMS battery management system. It should be understood that when the user switches gears, the gear should stay in the START gear for 1-2 seconds so that the enabling end of the voltage converter can successfully activate the voltage converter after receiving a starting voltage.

Continuing to explain, after the BMS battery management system is powered on, the first controllable switch and the second controllable switch are closed. At this time, under an action of the rebound switch, the power switch assembly automatically rotates from the START gear to the ACC gear, and the positive electrode end of the power lithium battery is connected with the enabling end of the voltage converter through the ACC port of the power switch assembly to maintain the working voltage required by the voltage converter. At this time, the power-on is completed, the power lithium battery outputs a high voltage, and the mower walks and works normally.

**After** mowing, if the user forgets to turn off the key, which means to forget to switch the power switch assembly from the ACC gear to the OFF gear, the BMS battery management system detects that the current signal transmitted by the current sensor is less than the preset threshold within the preset time, then outputs the control signal to the control end of the second controllable switch and disconnects the second controllable switch, thereby disconnecting a connection between the positive electrode end of the power lithium battery and the enabling end of the voltage converter. The voltage converter is powered off, and stops outputting the working voltage with 12V to the BMS battery management system. The BMS battery management system is powered off, then the first controllable switch is disconnected, the output power circuit of the power lithium battery is disconnected, and the mower is in a sleep state.

### Embodiment 3

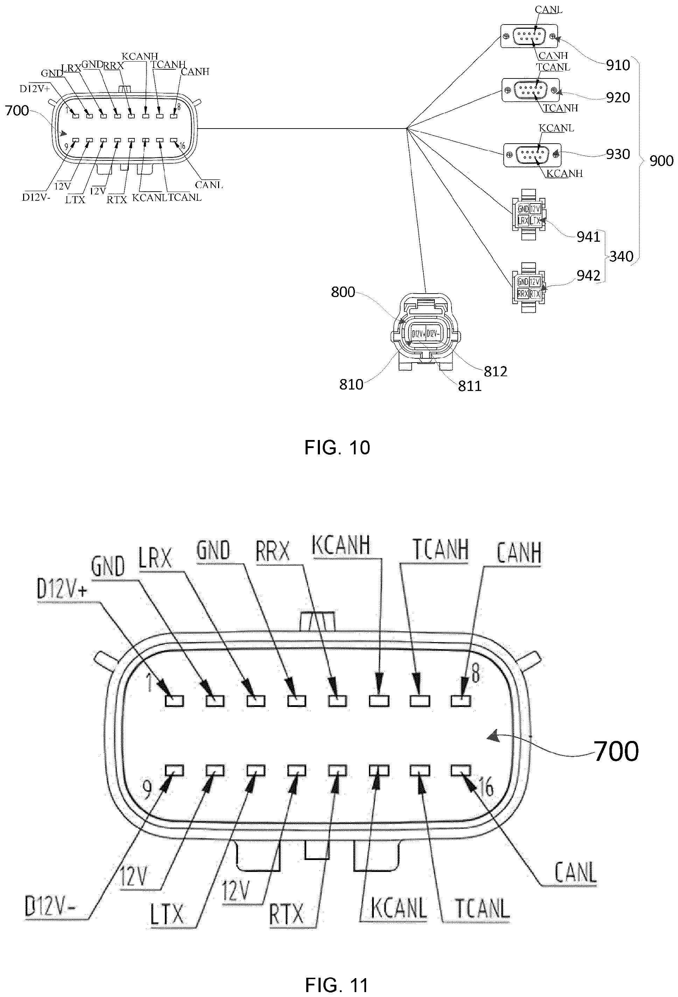

Please refer to FIG. 10. The disclosure provides a connecting structure for a diagnosis of an outdoor power equipment. Through setting a bus connector at a first end and a plurality of the communication connectors at a second end, a fast communication connection between the outdoor power equipment and the diagnostic device is achieved, which effectively solves a problem that there is no unified standard for connecting the outdoor power equipment with the diagnostic device during diagnosis, and different types of connectors and diagnostic devices need to be used for different control units, which causes the diagnosis of the outdoor power equipment being complicated and inconvenient. In an embodiment, the outdoor power equipment is, for example, the mower described in the disclosure.

Please refer to FIG. 10. The connecting structure for the diagnosis of the outdoor power equipment may include a bus connector 700, a power supply connector 800 and a plurality of communication connectors 900.

Please refer to FIG. 10 and FIG. 11. The bus connector 700 is arranged at a first end of the connecting structure for the diagnosis of the outdoor power equipment, and is used to be connected with the outdoor power equipment during diagnosis of the outdoor power equipment. The bus connector 700 is integrated with a plurality of first communication ports, and the plurality of first communication ports respectively correspond to the control units on the outdoor power equipment to be diagnosed. When the bus connector 700 is plugged into the outdoor power equipment, the plurality of the first communication ports on the bus connector 700 are connected with the control units to be diagnosed on the outdoor power equipment through plug-in ports on the outdoor power equipment.

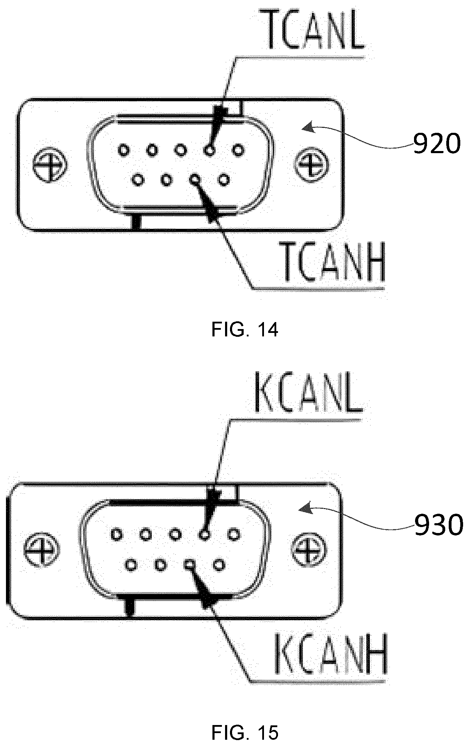

Please refer to FIG. 10 and FIG. 15. The plurality of the communication connectors 900 mentioned above is arranged at a second end of the connecting structure for the diagnosis of the outdoor power equipment relative to the bus connector 700, and is used to be connected with the diagnostic device during the diagnosis of the outdoor power equipment. The above-mentioned the plurality of the communication connectors 900 respectively correspond to the various control units on the outdoor power equipment to be diagnosed, and a second communication port is arranged on the communication connector 900. The second communication port corresponds to and matches the first communication port on the bus connector 700, and the first communication port is connected with the control unit to be diagnosed in the outdoor power equipment. When the bus connector 700 at a first end of the connecting structure is connected with the outdoor power equipment, and the plurality of the communication connectors 900 at a second end of the connecting structure are connected with the diagnostic device, the diagnostic device realizes a data communication interconnection with each control unit to be diagnosed on the outdoor power equipment through the connecting structure. Specifically, the diagnostic device may read data information stored in the control unit to be diagnosed on the outdoor power equipment through the first communication port and the second communication port connected with each other on the connecting structure, so as to diagnose and analyze the control unit based on the received data. The diagnostic device may also perform an online writing program or modify the stored data on the control unit to be diagnosed on the outdoor power equipment through the first communication port and the second communication port connected with each other on the connecting structure.

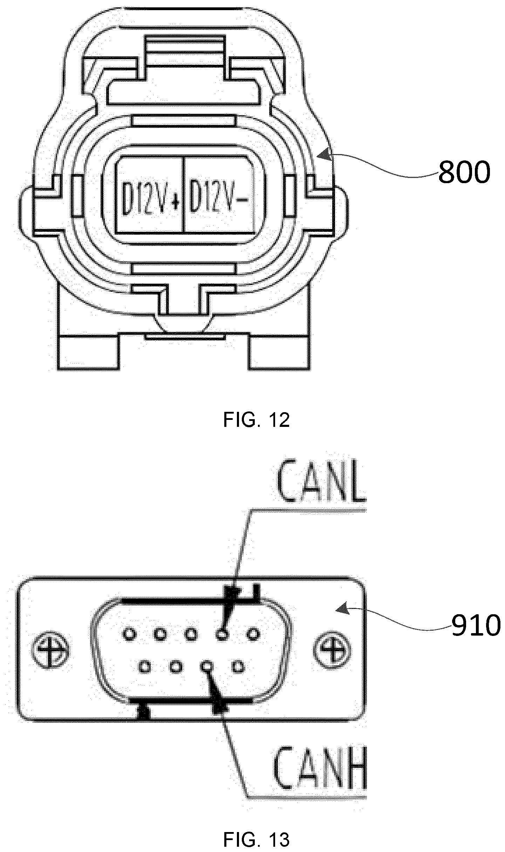

Please refer to FIG. 10 and FIG. 12. The connecting structure for diagnosis of the outdoor power equipment mentioned above further includes an electrical connecting structure, which includes a first electrical port arranged on the bus connector 700 and a second electrical port 810 arranged on the power supply connector 800. In an embodiment, the above-mentioned power supply connector 800 is arranged at the second end of the connecting structure of the diagnosis of the outdoor power equipment relative to the bus connector 700. A specification of the above-mentioned first electrical port matches a power supply specification of energy assemblies of the outdoor power equipment to be diagnosed. The second electrical port 810 on the power supply connector 800 corresponds to the first electrical port on the bus connector 700, and the second electrical port 810 may receive and output the same voltage as the first electrical port. When diagnosing the outdoor power equipment, the first electrical port on the bus connector 700 mentioned above is electrically connected with the energy assembly of the outdoor power equipment through the plug-in port on the outdoor power equipment passing through an internal circuit, the power supply connector 800 may be electrically connected with an external power supply, and the external power supply may transmit power to the outdoor power equipment through the connecting structure.

In addition, in this disclosure, a current direction through the above-mentioned connecting structure for the diagnosis of the outdoor power equipment may not be limited. For example, when the connecting structure is inserted and mounted on the outdoor power equipment through the bus connector 700, the outdoor power equipment may provide power to the external device electrically connected to the power supply connector 800 through the first electrical port and the second electrical port 810 connected with each other on the connecting structure, and can may receive power provided by the external power supply electrically connected with the power supply connector 800 through the first electrical port and the second electrical port 810 connected with each other on the connecting structure.

It should be noted that, in this disclosure, a current received or output by the above connecting structure may be direct current or alternating current. A current type conducted by the connecting structure is determined according to a power supply type used by the outdoor power equipment. For example, in an embodiment of the disclosure, since the energy assembly used by the outdoor power equipment to be diagnosed is a DC power supply, the current type conducted by the connecting structure is DC current. The above-mentioned power supply connector 800 is a DC regulation power connector. The second electrical port 810 of the power supply connector 800 is integrated with a second positive voltage electrical port 811 and a second negative voltage electrical port 812. At the same time, the first electrical port of the bus connector 700 is provided with a first positive voltage electrical port corresponding to and matching the second positive voltage electrical port 811, and a first negative voltage electrical port corresponding to and matching the second negative voltage electrical port 812. In an embodiment, the first positive voltage electrical port and the first negative voltage electrical port on the bus connector 700 and the second voltage electrical port 811 and the second negative voltage electrical port 812 on the power supply connector 800 use a same voltage specification. For example, in this embodiment, since the outdoor power equipment uses a DC voltage with 12V as the power supply of the power system, a voltage received and output by the first positive voltage electrical port and the second positive voltage electrical port 811 is +12V, and a voltage received and output by the first negative voltage electrical port and the second negative voltage electrical port 812 is -12V.

In addition, the second positive voltage electrical port 811 and the second negative voltage electrical port 812 on the power supply connector 800 are set to different colors to distinguish the second positive voltage electrical port 811 and the second voltage electrical port 812 when the power supply connector 800 is plugged into the external power supply or the external device. For example, in this embodiment, the second positive voltage electrical port 811 on the power supply connector 800 is set to red, and the second negative voltage electrical port 812 is set to black.

Please refer to FIG. 10 through FIG. 15. In an embodiment of the disclosure, the plurality of the communication connectors 900 may include a power device connector 910, a battery debugging connector 920 and a charger fast charging connector 930. When the power device connector 910 is connected with the diagnostic device, the diagnostic device reads information of the power device controller through the connecting structure, analyzes and processes the read information, and performs the online writing program of the power device controller. Specifically, when the battery debugging connector 920 is connected with the diagnostic device, the diagnostic device may read information of the energy assembly in the outdoor power equipment through the connecting structure, analyze and process the read information, and perform an online debugging of the energy assembly. When the charger fast charging connector 930 is connected with the diagnostic device, the diagnostic device reads fast charging data information of the charger in the outdoor power equipment through the connecting structure, analyzes and processes the read information, and performs an online writing program of the charger. For example, when the outdoor power equipment is the mower, the diagnostic device may be connected with the mower through the connecting structure. Specifically, the bus connector 700 of the connecting structure is plugged and mounted on the mower, and the plurality of the communication connectors 900 of the connecting structure are connected with the diagnostic device. The diagnostic device may obtain information about a cutter controller on a working part of the mower through the power device connector 910 of the connecting structure, and perform a data analysis, a processing and the online writing program on the cutter controller based on the obtained information.

The power device connector 910, the battery debugging connector 920 and the charger fast charging connector 930 are CAN connectors. In this embodiment, the above-mentioned CAN connector may be a DB9 connector, and the CAN bus on the DB9 connector is a twisted pair, namely a CANH line of a first CANH communication port end and a CANL line of a first CANL communication port. The two lines and ports need to be set to different colors for distinction. In order to achieve an efficient communication of CAN data between the bus connector 700 and the DB9 connector, the bus connector 700 is provided with a first CANL communication port and a first CANH communication port for each DB9 connector. The above-mentioned first CANL communication port and the first CANH communication port respectively correspond to and match a second CANL communication port and a second CANH communication port on the DB9 connector to achieve a rapid matching of the diagnostic device with the control unit to be diagnosed in the outdoor power equipment. In an embodiment, the second communication port on the power device connector 910 is provided with a VCANH communication port and a VCANL communication port, and the first communication port on the bus connector 700 is provided with the VCANH communication port and the VCANL communication port with a same specification corresponding to the VCANH communication port and the VCANL communication port of the power device connector 910. The second communication port on the battery debugging connector 920 is provided with a TCANH communication port and a TCANL communication port, and the first communication port on the bus connector 700 is provided with the TCANH communication port and the TCANL communication port with the same specification corresponding to the TCANH communication port and the TCANL communication port of battery debugging connector 920. The second communication port on the above-mentioned charger fast charging connector 930 is provided with a KCANH communication port and a KCANL communication port, and the first communication port on the bus connector 700 is provided with the KCANH communication port and the KCANL communication port of the same specifications corresponding to the above-mentioned KCANH communication port and the KCANL communication port of the charger fast charging connector 930.

Furthermore, the first communication port on the bus connector 700 and the second communication port on the communication connector 900 need to have a same communication baud rate in order to transmit data. In one embodiment of the embodiment, a baud rate range of the first communication port and the second communication port that can receive or output communication data is from 125K to 500K, such as 125K, 250K or 500K.

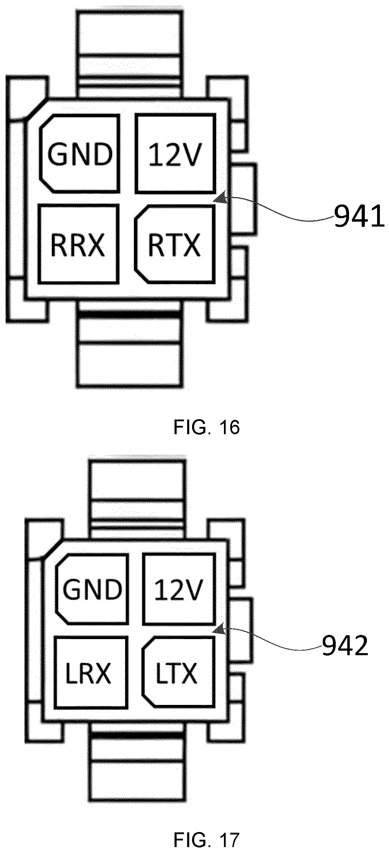

Please refer to FIG. 10. FIG. 16 and FIG. 17. The plurality of communication connectors 900 further include at least one walking writing connector 940, and the at least one walking writing connector 940 corresponds one-to-one to a walking control unit in the outdoor power equipment. In order to ensure that the diagnostic device may achieve a rapid communication connection with the walking control unit in the outdoor power equipment through connecting with the walking writing connector 940, the first communication port on the above-mentioned bus connector 700 is provided with a plurality of first connection ports corresponding to the plurality of the walking control units in the outdoor power equipment, and the second communication port of the above-mentioned walking writing connector 940 is provided with plurality of the second connection ports corresponding to the plurality of the first connection ports. In an embodiment, the plurality of the first connection ports and second connection ports used to connect each walking control unit in the outdoor power equipment include one ground connection port, one electrical port and at least one communication port, and the plurality of the second connection ports on the above-mentioned walking writing connector 940 need to be set to different colors for distinction.

For example, in an embodiment of the disclosure, two walking control units are arranged on the working part of the outdoor power equipment, and the two walking control units are a first walking control unit and a second walking control unit. In order to realize a data intercommunication with the first walking control unit, four first connection ports are set in the first communication port of the bus connector 700, at least one walking writing connector 940 on the corresponding connecting structure is provided with a first walking writing connector 941, and a second communication port of the first walking writing connector 941 is provided with the second connection ports corresponding to the above four first connection ports. In an embodiment, the four first connection ports or the four second connection ports are respectively an electrical port L12V with 12V, the ground connection port LGND, and the two communication ports LRX and LTX for sending and receiving data of the control unit. At the same time, in order to realize the data intercommunication with the second walking control unit, the first communication port of the bus connector 700 is further provided with the four first connection ports, and at least one walking writing connector 940 on the corresponding connecting structure is provided with a second walking writing connector 942. The second communication port of the second walking writing connector 942 is provided with the second connection ports corresponding to the above four first connection ports. In an embodiment, the four first connection ports or the four second connection ports are respectively electrical ports R12V with 12V, the ground connection port RGND, and the two communication ports RRX and RTX for receiving and sending data of the control unit.

Please refer to FIG. 10 and FIG. 11. In an embodiment of the disclosure, the bus connector 700 in the above connection structure is a sixteen-pin port connector, and sixteen ports are arranged on the bus connector 700. The above sixteen ports integrate the first positive voltage electrical port and the first negative voltage electrical port of the first electrical port and the first connection ports of the plurality of the first communication ports. In an embodiment, the plurality of the first communication ports respectively correspond to each control unit to be diagnosed in the outdoor power equipment, and each first communication port may be provided with at least one first connection port according to the corresponding control unit. Correspondingly, the connecting structure may include the power supply connector 800 configured as a double-pin port DC connector and the plurality of the communication connectors 900. In an embodiment, the second positive voltage electrical port 811 and the second negative voltage electrical port 812 arranged on the above-mentioned power supply connector 800 correspond to and match the first positive voltage electrical port and the first negative voltage electrical port on the bus connector 700. The above-mentioned plurality of the communication connectors 900 include two four-pin port connectors and three DB9 connectors, and at the same time, the four second connection ports on the above-mentioned four-pin port connector and the CANH port and the CANL port on the DB9 connector respectively correspond to the above-mentioned plurality of the first connection ports. It may be seen that, in this embodiment, the sixteen ports on the bus connector 700 correspond to the second positive voltage electrical port 811 and the second negative voltage electrical port 812 on the power connector 800 and the second communication ports on the plurality of the communication connectors 900 respectively. In an embodiment, the electrical port and the communication port of the sixteen ports of the bus connector 700 are arranged at intervals to avoid an electromagnetic interference caused by a large voltage difference between the data signals transmitted by the electrical port and the communication port.

Furthermore, the sixteen ports of the bus connector 700 may be defined without limitation under a condition that the electrical port and the communication port are arranged at intervals. In this embodiment, the sixteen ports on the bus connector 700 may include following definition methods:

### Definition method 1

| Line loop table of the diagnostic device | | | | | | | |
|---|---|---|---|---|---|---|---|
| Connector name | Bus connector | Power device connector | Battery debugging connector | Charger fast charging connector | First walking writing connector | Second walking brushing connector | Power supply connector |
| Hole position | Sixteen-pi n port connector | DB9 connector | DB9 connector | DB9 connector | Four-pin port connector | Four-pin port connector | Double-pin port DC connector |
| 1 | D12V+ | | | | LRX | RRX | D12V- |
| 2 | LGND | VCANL | TCANL | KCANL | LGND | RGND | D12V+ |
| 3 | LRX | | | | LTX | RTX | |
| 4 | RGND | | | | L12V | R12V | |
| 5 | RRX | | | | | | |
| 6 | KCANH | | | | | | |
| 7 | TCANH | VCANH | TCANH | KCANH | | | |
| 8 | VCANH | | | | | | |
| 9 | D12V- | | | | | | |
| 10 | L12V | | | | | | |
| 11 | LTX | | | | | | |
| 12 | R12V | | | | | | |
| 13 | RTX | | | | | | |
| 14 | KCANL | | | | | | |
| 15 | TCANL | | | | | | |
| 16 | VCANL | | | | | | |

### Definition method 2

| Line loop table of the diagnostic device | | | | | | | |
|---|---|---|---|---|---|---|---|
| Connector name | Bus connector | Power device connector | Battery debugging connector | Charger fast charging connector | First walking writing connector | Second walking brushing connector | Power supply connector |
| Hole position | Sixteen-pi n port connector | DB9 connector | DB9 connector | DB9 connector | Four-pin port connector | Four-pin port connector | Double-pin port DC connector |
| 1 | D12V+ | | | | LRX | RRX | D12V- |
| 2 | RGND | VCANL | TCANL | KCANL | LGND | RGND | D12V+ |
| 3 | RRX | | | | LTX | RTX | |
| 4 | LGND | | | | L12V | R12V | |
| 5 | LRX | | | | | | |
| 6 | KCANH | | | | | | |
| 7 | TCANH | VCANH | TCANH | KCANH | | | |
| 8 | VCANH | | | | | | |
| 9 | D12V- | | | | | | |
| 10 | R12V | | | | | | |
| 11 | RTX | | | | | | |
| 12 | L12V | | | | | | |
| 13 | LTX | | | | | | |
| 14 | KCANL | | | | | | |
| 15 | TCANL | | | | | | |
| 16 | VCANL | | | | | | |

### Definition method 3

| Line loop table of the diagnostic device | | | | | | | |
|---|---|---|---|---|---|---|---|
| Connector name | Bus connector | Power device connector | Battery debugging connector | Charger fast charging connector | First walking writing connector | Second walking brushing connector | Power supply connector |
| Hole position | Sixteen-pi n port connector | DB9 connector | DB9 connector | DB9 connector | Four-pin port connector | Four-pin port connector | Double-pin port DC connector |
| 1 | D12V- | | | | LRX | RRX | D12V- |
| 2 | LGND | VCANL | TCANL | KCANL | LGND | RGND | D12V+ |
| 3 | LRX | | | | LTX | RTX | |
| 4 | RGND | | | | L12V | R12V | |
| 5 | RRX | | | | | | |
| 6 | KCANH | | | | | | |
| 7 | TCANH | VCANH | TCANH | KCANH | | | |
| 8 | VCANH | | | | | | |
| 9 | D12V+ | | | | | | |
| 10 | L12V | | | | | | |
| 11 | LTX | | | | | | |
| 12 | R12V | | | | | | |
| 13 | RTX | | | | | | |
| 14 | KCANL | | | | | | |
| 15 | TCANL | | | | | | |
| 16 | VCANL | | | | | | |

### Definition method 4

| Line loop table of the diagnostic device | | | | | | | |
|---|---|---|---|---|---|---|---|
| Connector name | Bus connector | Power device connector | Battery debugging connector | Charger fast charging connector | First walking writing connector | Second walking brushing connector | Power supply connector |
| Hole position | Sixteen-pi n port connector | DB9 connector | DB9 connector | DB9 connector | Four-pin port connector | Four-pin port connector | Double-pin port DC connector |
| 1 | D12V+ | | | | LRX | RRX | D12V- |
| 2 | LGND | VCANL | TCANL | KCANL | LGND | RGND | D12V+ |
| 3 | LRX | | | | LTX | RTX | |
| 4 | RGND | | | | L12V | R12V | |
| 5 | RRX | | | | | | |
| 6 | KCANL | | | | | | |
| 7 | TCANL | VCANH | TCANH | KCANH | | | |
| 8 | VCANL | | | | | | |
| 9 | D12V- | | | | | | |
| 10 | L12V | | | | | | |
| 11 | LTX | | | | | | |
| 12 | R12V | | | | | | |
| 13 | RTX | | | | | | |
| 14 | KCANH | | | | | | |
| 15 | TCANH | | | | | | |
| 16 | VCANH | | | | | | |

### Definition method 5

| Line loop table of the diagnostic device | | | | | | | |
|---|---|---|---|---|---|---|---|
| Connector name | Bus connector | Power device connector | Battery debugging connector | Charger fast charging connector | First walking writing connector | Second walking brushing connector | Power supply connector |
| Hole position | Sixteen-pi n port connector | DB9 connector | DB9 connector | DB9 connector | Four-pin port connector | Four-pin port connector | Double-pin port DC connector |
| 1 | D12V- | | | | LRX | RRX | D12V- |
| 2 | LGND | VCANL | TCANL | KCANL | LGND | RGND | D12V+ |
| 3 | LRX | | | | LTX | RTX | |
| 4 | RGND | | | | L12V | R12V | |
| 5 | RRX | | | | | | |
| 6 | KCANL | | | | | | |
| 7 | TCANL | VCANH | TCANH | KCANH | | | |
| 8 | VCANL | | | | | | |
| 9 | D12V+ | | | | | | |
| 10 | L12V | | | | | | |
| 11 | LTX | | | | | | |
| 12 | R12V | | | | | | |
| 13 | RTX | | | | | | |
| 14 | KCANH | | | | | | |
| 15 | TCANH | | | | | | |
| 16 | VCANH | | | | | | |

### Definition method 6

| Line loop table of the diagnostic device | | | | | | | |
|---|---|---|---|---|---|---|---|
| Connector name | Bus connector | Power device connector | Battery debugging connector | Charger fast charging connector | First walking writing connector | Second walking brushing connector | Power supply connector |
| Hole position | Sixteen-pi n port connector | DB9 connector | DB9 connector | DB9 connector | Four-pin port connector | Four-pin port connector | Double-pin port DC connector |
| 1 | D12V- | | | | LRX | RRX | D12V- |
| 2 | L12V | VCANL | TCANL | KCANL | LGND | RGND | D12V+ |
| 3 | LTX | | | | LTX | RTX | |
| 4 | R12V | | | | L12V | R12V | |
| 5 | RTX | | | | | | |
| 6 | KCANH | | | | | | |
| 7 | TCANH | VCANH | TCANH | KCANH | | | |
| 8 | VCANH | | | | | | |
| 9 | D12V+ | | | | | | |
| 10 | LGND | | | | | | |
| 11 | LRX | | | | | | |
| 12 | RGND | | | | | | |
| 13 | RRX | | | | | | |
| 14 | KCANL | | | | | | |
| 15 | TCANL | | | | | | |
| 16 | VCANL | | | | | | |

### Definition method 7

| Line loop table of the diagnostic device | | | | | | | |
|---|---|---|---|---|---|---|---|
| Connector name | Bus connector | Power device connector | Battery debugging connector | Charger fast charging connector | First walking writing connector | Second walking brushing connector | Power supply connector |
| Hole position | Sixteen-pi n port connector | DB9 connector | DB9 connector | DB9 connector | Four-pin port connector | Four-pin port connector | Double-pin port DC connector |
| 1 | D12V- | | | | LRX | RRX | D12V- |
| 2 | L12V | VCANL | TCANL | KCANL | LGND | RGND | D12V+ |
| 3 | LTX | | | | LTX | RTX | |
| 4 | R12V | | | | L12V | R12V | |
| 5 | RTX | | | | | | |
| 6 | KCANL | | | | | | |
| 7 | TCANL | VCANH | TCANH | KCANH | | | |
| 8 | VCANL | | | | | | |
| 9 | D12V+ | | | | | | |
| 10 | LGND | | | | | | |
| 11 | LRX | | | | | | |
| 12 | RGND | | | | | | |
| 13 | RRX | | | | | | |
| 14 | KCANH | | | | | | |
| 15 | TCANH | | | | | | |
| 16 | VCANH | | | | | | |

The disclosure further provides the diagnostic device of the outdoor power equipment. The diagnostic device of the outdoor power equipment is connected with the outdoor power equipment through the connecting structure, which completes a data exchange with the outdoor power equipment, and realizes an information reading of each control unit to be diagnosed in the outdoor power equipment, fault diagnosis, online configuration and other operations. The connecting structure for the diagnosis of the outdoor power equipment mentioned above may include the bus connector 700 and the plurality of the communication connectors 900.

In an embodiment, the bus connector 700 is arranged at the first end of the connecting structure for the diagnosis of the outdoor power equipment, and is used to be connected with the outdoor power equipment during the diagnosis of the outdoor power equipment. The bus connector 700 is integrated with the plurality of first communication ports, and the plurality of first communication ports respectively correspond to the control units on the outdoor power equipment to be diagnosed. When the bus connector 700 is plugged into the outdoor power equipment, the plurality of the first communication ports on the bus connector 700 are connected with the control units to be diagnosed on the outdoor power equipment through plug-in ports on the outdoor power equipment.

The plurality of the communication connectors 900 mentioned above is arranged at the second end of the connecting structure for the diagnosis of the outdoor power equipment relative to the bus connector 700, and is used to be connected with the diagnostic device during the diagnosis of the outdoor power equipment. The above-mentioned the plurality of the communication connectors 900 respectively correspond to the various control units on the outdoor power equipment to be diagnosed, and the second communication port is arranged on the communication connector 900. The second communication port corresponds to and matches the first communication port on the bus connector 700, and the first communication port is connected with the control unit to be diagnosed in the outdoor power equipment. When the bus connector 700 at the first end of the connecting structure is connected with the outdoor power equipment, and the plurality of the communication connectors 900 at the second end of the connecting structure are connected with the diagnostic device, the diagnostic device realizes the data communication interconnection with each control unit to be diagnosed on the outdoor power equipment through the connecting structure. Specifically, the diagnostic device may read data information stored in the control unit to be diagnosed on the outdoor power equipment through the first communication port and the second communication port connected with each other on the connecting structure, so as to diagnose and analyze the control unit based on the received data. The diagnostic device may also perform the online writing program or modify the stored data on the control unit to be diagnosed on the outdoor power equipment through the first communication port and the second communication port connected with each other on the connecting structure.

The selected embodiments of the disclosure mentioned above are only used to help explain the disclosure. The embodiments do not describe all details in detail, nor limit the disclosure to only one specific embodiment described. Obviously, many modifications and variations may be made based on the specification. This specification selects and specifically describes these embodiments in order to better explain principles and practical applications of the disclosure, so that technicians in a relevant technical field can well understand and utilize the disclosure. The disclosure is limited only by claims appended hereto along with their full scope and equivalents.

## Claims

1. A control method of an outdoor power equipment, comprising:
determining corresponding initial current limiting values and maximum rotating speeds of a cutter motor and a walking motor of the outdoor power equipment according to previous mowing data;
monitoring an input current of each of the cutter motor and the walking motor, and determining whether the input current of each of the cutter motor and the walking motor is less than the corresponding current limiting value; and
resetting the current limiting values and the maximum rotating speeds of the walking motor and the cutter motor according to a current slope of the outdoor power equipment and a maximum discharging capacity of a battery pack if the input current of the walking motor is continuously equal to or greater than the current limiting value of the walking motor and an output value of the battery pack of the outdoor power equipment is less than the maximum discharging capacity.

2. The control method of the outdoor power equipment according to claim 1, further comprising: increasing an output power of the walking motor and decreasing an output power of the cutter motor if the input current of the walking motor is continuously equal to or greater than the current limiting value of the walking motor and the output value of the battery pack is less than the maximum discharging capacity.

3. The control method of the outdoor power equipment according to claim 1, further comprising: resetting the current limiting value of the cutter motor and the maximum rotating speed of the cutter motor according to the maximum discharging capacity of the battery pack if the input current of the walking motor is continuously less than the current limiting value of the walking motor, the input current of the cutter motor is continuously equal to or greater than the current limiting value of the cutter motor and the output value of the battery pack is less than the maximum discharging capacity.

4. The control method of the outdoor power equipment according to claim 1, further comprising: increasing the current limiting value of the cutter motor and decreasing the maximum rotating speed of the cutter motor to increase the output power and an output torque of the cutter motor if the input current of the walking motor is continuously less than the current limiting value of the walking motor, the input current of the cutter motor is continuously equal to or greater than the current limiting value of the cutter motor, and the output value of the battery pack is less than the maximum discharging capacity.

5. The control method of the outdoor power equipment according to claim 1, further comprising: maintaining the current limiting values and maximum rotating speeds, and displaying the current slope as being too large on an output interface of the outdoor power equipment if the input current of the walking motor is continuously equal to or greater than the current limiting value of the walking motor, and the output value of the battery pack is equal to or greater than the maximum discharging capacity.

6. The control method of the outdoor power equipment according to claim 1, further comprising: maintaining the current limiting values and maximum rotating speeds, and displaying a current lawn condition as being poor on an output interface of the outdoor power equipment if the input current of the walking motor is continuously less than the current limiting value of the walking motor, the input current of the cutter motor is continuously equal to or greater than the current limiting value of the cutter motor, and the output value of the battery pack is equal to or greater than the maximum discharging capacity.

7. The control method of the outdoor power equipment according to claim 1, wherein, the initial current limiting value of each of the cutter motor and the walking motor is an average value of all previous current limiting values correspondingly, and the initial maximum rotating speed of each of the cutter motor and the walking motor is an average value of all previous maximum rotating speeds correspondingly.

8. The control method of the outdoor power equipment according to claim 1, further comprising: maintaining the current limiting values and the current maximum rotating speeds if the input current of the cutter motor is less than the current limiting value of the cutter motor and the input current of the walking motor is less than the current limiting value of the walking motor.

9. The control method of the outdoor power equipment according to claim 1, wherein, after resetting the current limiting value and the maximum rotating speed of the walking motor and/or the cutter motor, the control method of the outdoor power equipment comprises:
determining whether the input current of the walking motor and the cutter motor is less than the current limiting value; and
cyclically regulating the current limiting value and the maximum rotating speed of the cutter motor and/or the walking motor until the input current of the cutter motor and/or the walking motor is less than the current limiting value if the input current of the cutter motor and/or the walking motor is continuously equal to or greater than the current limiting value, or displaying an alarm on an output interface of the outdoor power equipment if the input current of the cutter motor and/or the walking motor is continuously equal to or greater than the current limiting value.

10. The control method of the outdoor power equipment according to claim 1, further comprising: first regulating the current limiting value of the walking motor to enable the current limiting value of the walking motor to be less than the current limiting value if the input current of the walking motor is continuously equal to or greater than the current limiting value of the walking motor, and then determining whether the input current of the cutter motor is continuously equal to or greater than the current limiting value of the cutter motor.

11. The control method of the outdoor power equipment according to claim 1, wherein, when a mowing height is higher, and/or a speed of the outdoor power equipment is greater, and/or when there is a lawn collecting function, the current limiting value of the cutter motor is greater.

12. The control method of the outdoor power equipment according to claim 1, wherein, a time threshold of determining that the input current of the walking motor and/or the cutter motor is continuously equal to or greater than the current limiting value is from 180ms to 220ms.

13. The control method of the outdoor power equipment according to claim 1, wherein, if the outdoor power equipment is in a basic mode, the control method of the outdoor power equipment comprises:
setting the current limiting value and the maximum rotating speed of each of the cutter motor and the walking motor correspondingly according to a physical performance thereof.

14. The control method of the outdoor power equipment according to claim 1, wherein, if the outdoor power equipment is in a preset mode, the control method of the outdoor power equipment comprises:
setting the current limiting value and the maximum rotating speed of each of the cutter motor and the walking motor correspondingly according to information input through an input interface of the outdoor power equipment and a physical performance of the cutter motor and the walking motor.

15. The control method of the outdoor power equipment according to claim 1, wherein, if the outdoor power equipment is in a preset mode, a maximum speed and the current limiting value of the mowing motor are set according to information of a lawn type, a mowing height, and whether the lawn is collected.

16. An outdoor power equipment, comprising:
a cutter assembly, comprising a cutter motor;
a walking assembly, comprising a walking motor;
an information collection assembly, monitoring an input current of each of the cutter motor and the walking motor in the cutter assembly and the walking assembly respectively; and
a control assembly, electrically connected with the cutter assembly, the walking assembly and the information collection assembly;
wherein, if the outdoor power equipment is in a dynamic mode, the control assembly is configured to determine corresponding initial current limiting values and maximum rotating speeds of the cutter motor and the walking motor according to previous mowing data, and determine whether the input current of each of the cutter motor and the walking motor is less than the corresponding current limiting value; and
if the input current of the walking motor is continuously equal to or greater than the current limiting value of the walking motor and an output value of a battery pack is less than a maximum discharging capacity, the control assembly is configured to set the current limiting values and the maximum rotating speeds of the walking motor and the cutter motor according to a current slope of the outdoor power equipment and the maximum discharging capacity of the battery pack.

17. The outdoor power equipment according to claim 16, further comprising:
an input interface, arranged on the outdoor power equipment and configured to set the current limiting values and the maximum rotating speeds of the cutter motor and the walking motor according to information input through the input interface and a physical performance of the cutter motor and the walking motor if the outdoor power equipment is in a preset mode.

18. The outdoor power equipment according to claim 16, further comprising:
an output interface, arranged on the outdoor power equipment, the control assembly configured to maintain the current limiting value and the maximum rotating speed and the output interface configured to display a current slope on the output interface as being too large if the input current of the walking motor is continuously equal to or greater than the current limiting value of the walking motor, and the output value of the battery pack is equal to or greater than the maximum discharging capacity; and the control assembly configured to maintain the current limiting value and the maximum rotating speed, and the output interface configured to display the current lawn condition on the output interface as being poor if the input current of the walking motor is continuously less than the current limiting value of the walking motor, the input current of the cutter motor is continuously equal to or greater than the current limiting value of the cutter motor, and the output value of the battery pack is equal to or greater than the maximum discharging capacity.

19. The outdoor power equipment according to claim 16, further comprising:
at least one battery pack, and the control assembly configured to determine whether the output value of the battery pack is equal to or greater than the maximum discharging capacity if the input current of the walking motor or the cutter motor is equal to or greater than the current limiting value;
reset the current limiting values and the maximum rotating speeds of the walking motor and the cutter motor according to the current slope of the outdoor power equipment and the maximum discharging capacity of the battery pack if the input current of the walking motor is continuously equal to or greater than the current limiting value and an output value of a battery pack is less than the maximum discharging capacity; and
reset the current limiting value and the maximum rotating speed of the cutter motor according to the maximum discharging capacity of the battery pack if the input current of the walking motor is continuously less than the current limiting value, the input current of the cutter motor is continuously equal to or greater than the current limiting value and an output value of the battery pack is less than the maximum discharging capacity.

20. The outdoor power equipment according to claim 16, further comprising: a power lithium battery, a voltage converter, a battery management system, a power switch assembly, a current sensor, a high-voltage power connector and a plurality of controllable switches.
